(19) Europäisches Patentamt
European Patent Office
Office européen des brevets

(11) EP 2 607 961 B1

(12) # EUROPEAN PATENT SPECIFICATION

(45) Date of publication and mention of the grant of the patent:
**14.09.2016 Bulletin 2016/37**

(21) Application number: **11817892.0**

(22) Date of filing: **28.07.2011**

(51) Int Cl.:
***G03G 15/02*** *(2006.01)* ***C08G 79/14*** *(2006.01)*

(86) International application number:
**PCT/JP2011/004265**

(87) International publication number:
**WO 2012/023241 (23.02.2012 Gazette 2012/08)**

(54) **ELECTRIFICATION MEMBER, PROCESS CARTRIDGE, AND ELECTROPHOTOGRAPHIC DEVICE**

ELEKTRIFIZIERUNGSELEMENT, PROZESSKARTUSCHE UND ELEKTROFOTOGRAFISCHE VORRICHTUNG

ÉLÉMENT D'ÉLECTRISATION, CARTOUCHE DE TRAITEMENT ET DISPOSITIF ÉLECTROPHOTOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2010 JP 2010183984**

(43) Date of publication of application:
**26.06.2013 Bulletin 2013/26**

(73) Proprietor: **Canon Kabushiki Kaisha**
**Tokyo 146-8501 (JP)**

(72) Inventors:
- **SUZUMURA, Noriko**
  **Tokyo 146-8501 (JP)**
- **KURODA, Noriaki**
  **Tokyo 146-8501 (JP)**
- **TOMOMIZU, Yuya**
  **Tokyo 146-8501 (JP)**

(74) Representative: **TBK**
**Bavariaring 4-6**
**80336 München (DE)**

(56) References cited:

| | |
|---|---|
| **EP-A1- 1 834 217** | **EP-A1- 1 991 915** |
| **EP-A2- 2 115 039** | **JP-A- 5 150 617** |
| **JP-A- 2004 037 786** | **JP-A- 2005 024 672** |
| **JP-A- 2006 039 286** | **JP-A- 2006 293 004** |
| **JP-A- 2007 004 102** | **US-A1- 2010 135 695** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 607 961 B1

Printed by Jouve, 75001 PARIS (FR)

## Description

### Technical Field

The present invention relates to a charging member used for contact charging for an electrophotographic apparatus, a process cartridge, and an electrophotographic apparatus.

### Background Art

Usually, a charging member that contacts an electrophotographic photosensitive member to charge the electrophotographic photosensitive member has a configuration having an elastic layer containing a rubber in order to sufficiently and uniformly ensure the contact nip between the electrophotographic photosensitive member and the charging member. The elastic layer inevitably contains a low molecular weight component. For this reason, if the charging member is used for a long period of time, the low molecular weight component may exude from the surface of the charging member to contaminate the surface of the electrophotographic photosensitive member. For this problem, Japanese Patent Application Laid-Open No. 2001-173641 proposes a configuration in which the circumferential surface of the elastic layer is coated with an inorganic oxide coating film or an inorganic-organic hybrid coating film to suppress exudation of the low molecular weight component from the surface of the charging member.

Recently, as the speed in an electrophotographic image forming process is higher, the contact time between the electrophotographic photosensitive member and the charging member is relatively shorter. This tendency is disadvantageous in stable and secure charging of the electrophotographic photosensitive member. Under such circumstances, the charging member having a thick film for suppressing exudation of the low molecular weight component formed on the circumferential surface thereof is disadvantageous in stable and secure charging of the electrophotographic photosensitive member.

On the other hand, the surface of the electrophotographic photosensitive member may have a remaining toner or external additive even after a toner image is transferred from the electrophotographic photosensitive member onto a paper or the like. Such a residue may adhere to the surface of the charging member due to long-term use, leading to reduction in charging performance of the charging member and reduction in quality of an electrophotographic image. In order to suppress such toner filming caused by adhesion of the toner, Japanese Patent Application Laid-Open No. 2000-337355 discloses an electroconductive roller having an outermost layer including a specific silicone graft polymer.

### Citation List

### Patent Literature

PTL 1: Japanese Patent Application Laid-Open No. 2001-173641.
PTL 1: Japanese Patent Application Laid-Open No. 2000-337355.

### Summary of Invention

### Technical Problem

The present invention is directed to provide a charging member having high charging performance in which exudation of a low molecular weight component from an elastic layer and adhesion of a toner to a surface are suppressed to reduce dirt of a surface layer. The present invention is also directed to provide an electrophotographic apparatus and process cartridge that can stably form an electrophotographic image with high quality.

### Solution to Problem

According to one aspect of the present invention, there is provided a charging member comprising a substrate, an elastic layer and a surface layer, wherein the surface layer comprises a polymer compound having structural units represented by the following formulas (1), (2) and (3), and having a Si-O-Ti bond, a Ti-O-Ta bond, and a Si-O-Ta bond:

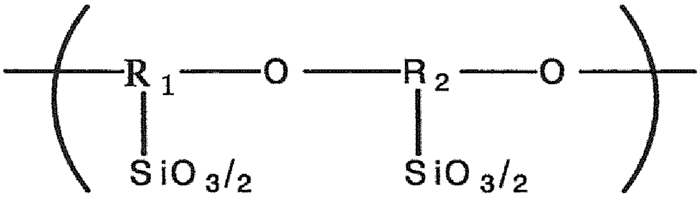

Formula (1)

$TiO_{4/2}$ Formula (2)

$TaO_{5/2}$ Formula (3)

wherein $R_1$ and $R_2$ each independently represent any of the following formulas (4) to (7):

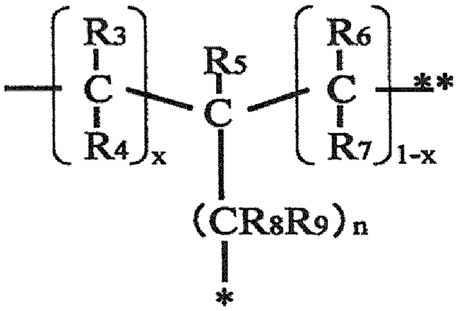

Formula (4)

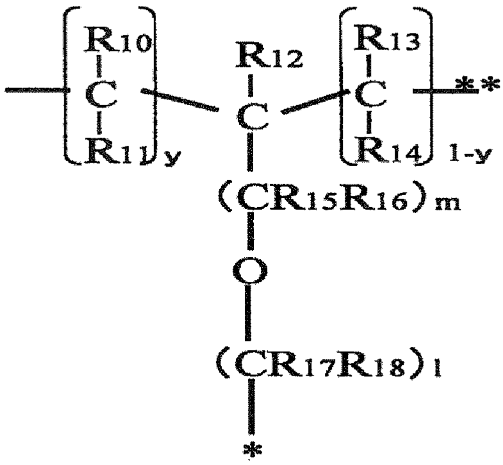

Formula (5)

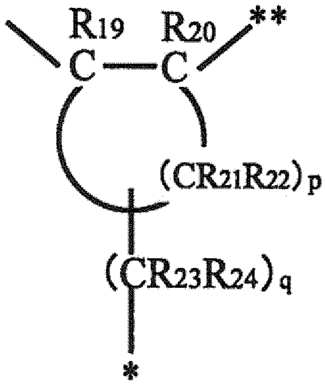

Formula (6)

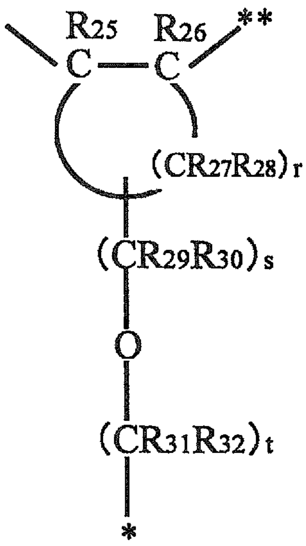

Formula (7)

wherein $R_3$ to $R_7$, $R_{10}$ to $R_{14}$, $R_{19}$, $R_{20}$, $R_{25}$ and $R_{26}$ each independently represent hydrogen, an alkyl group having 1 to 4 carbon atoms, a hydroxyl group, a carboxyl group, or an amino group; $R_8$, $R_9$, $R_{15}$ to $R_{18}$, $R_{23}$, $R_{24}$, and $R_{29}$ to $R_{32}$ each independently represent hydrogen or an alkyl group having 1 to 4 carbon atoms; $R_{21}$, $R_{22}$, $R_{27}$, and $R_{28}$ each independently represent hydrogen, an alkoxyl group having 1 to 4 carbon atoms, or an alkyl group having 1 to 4 carbon atoms; n, m, 1, q, s and t each independently represent an integer of not less than 1 and not more than 8, p and r each independently represent an integer of not less than 4 and not more than 12, and x and y each independently represent 0 or 1; and * and ** each represent a position at which a silicon atom and an oxygen atom in the formula (1) are bound.

According to another aspect of the present invention, there is provided an electrophotographic apparatus comprising the charging member disposed in contact with the electrophotographic photosensitive member.

According to another aspect of the present invention, there is provided a process cartridge comprising the charging member disposed in contact with the electrophotographic photosensitive member, the process cartridge being detachably attached to a main body of an electrophotographic apparatus.

**Advantageous Effects of Invention**

The present invention can provide a charging member in which dirt of the surface layer that causes charging deficit is reduced, and a process cartridge and electrophotographic apparatus including the charging member.

**Brief Description of Drawings**

Fig. 1 is a drawing illustrating an example of a configuration of a charging member according to the present invention.
Fig. 2 is a sectional view of an electrophotographic apparatus including a process cartridge according to the present invention.
Fig. 3 is a drawing illustrating an apparatus for measuring a coefficient of kinetic friction.
Fig. 4 is a drawing illustrating a spectrum in $^{29}$Si-NMR.
Fig. 5 is a drawing illustrating a spectrum in $^{13}$C-NMR.
Fig. 6 is a drawing for describing a crosslinking reaction in a step of forming a surface layer according to the present invention.
Fig. 7A is a drawing illustrating a chemical structure of a polymer compound according to the present invention.
Fig. 7B is a drawing illustrating a chemical structure of a polymer compound according to the present invention.

**Description of Embodiments**

The charging member according to the present invention shown in Fig. 1 has a configuration in which a substrate 101, a conductive elastic layer 102 and a surface layer 103 are laminated in this order.

[Substrate]

As the substrate, a metal (or alloy) substrate formed with iron, copper, stainless steel, aluminum, an aluminum alloy or nickel can be used.

[Elastic layer]

As a material that forms the elastic layer, one or two or more of rubbers and elastic bodies such as a thermoplastic elastomer used for an elastic layer (conductive elastic layer) of the conventional charging member can be used. Examples of the rubbers include: urethane rubbers, silicone rubbers, butadiene rubbers, isoprene rubbers, chloroprene rubbers, styrene-butadiene rubbers, ethylene-propylene rubbers, polynorbornene rubbers, styrene-butadiene-styrene rubbers, acrylonitrile rubbers, epichlorohydrin rubbers and alkyl ether rubbers.

The elastic layer includes a conductive agent so as to have a predetermined conductivity. A suitable range of an electric resistance value of the elastic layer is not less than $10^2\ \Omega$ and not more than $10^8\ \Omega$, and a more suitable range is not less than $10^3\ \Omega$ and not more than $10^6\ \Omega$. Examples of the conductive agent used for the conductive elastic layer include cationic surface active agents, anionic surface active agents, amphoteric ion surface active agents, antistatic agents, and electrolytes.

Examples of the cationic surface active agents include: quaternary ammonium salts (such as lauryl trimethyl ammonium, stearyl trimethyl ammonium, octadodecyl trimethyl ammonium, dodecyl trimethyl ammonium, hexadecyl trimethyl ammonium, and modified fatty acid-dimethylethyl ammonium), perchlorate salts, chlorate salts, fluoroborate salts, ethosulfate salts, and halogenated benzyl salts (such as benzyl bromide salts and benzyl chloride salts). Examples of the anionic surface active agents include: aliphatic sulfonate salts, higher alcohol sulfate ester salts, higher alcohol ethylene oxide added sulfate ester salts, higher alcohol phosphate ester salts, and higher alcohol ethylene oxide added phosphate ester salts.

Examples of the antistatic agent include nonionic antistatic agents such as higher alcohol ethylene oxide, polyethylene glycol fatty acid esters, and polyhydric alcohol fatty acid esters. Examples of the electrolytes include salts (such as quaternary ammonium salts) of Group I metals (such as Li, Na, and K) in the periodic table. Examples of the salts of Group I metals in the periodic table specifically include $LiCF_3SO_3$, $NaClO_4$, $LiAsF_6$, $LiBF_4$, NaSCN, KSCN, and NaCl.

As the conductive agents for the conductive elastic layer, salts (such as $Ca(ClO_4)_2$) of Group II metals (such as Ca and Ba) in the periodic table and the antistatic agents derived from these can also be used. Ion conductive agents such as a complex of these and polyhydric alcohols (such as 1,4-butanediol, ethylene glycol, polyethylene glycol, propylene glycol, and polyethylene glycol) or derivatives thereof, and a complex of these and monools (such as ethylene glycol monomethyl ether and ethylene glycol monoethyl ether) can be used.

As the conductive agent for the elastic layer, carbon materials (such as conductive carbon black and graphite), metal oxides (such as tin oxide, titanium oxide and zinc oxide), and metals (such as nickel, copper, silver and germanium) can also be used.

For the hardness of the conductive elastic layer, the MD-1 hardness is preferably not less than 60 degrees and not more than 85 degrees, and particularly more preferably not less than 70 degrees and not more than 80 degrees from the viewpoint of suppressing deformation of the charging member when the charging member is brought into contact with the electrophotographic photosensitive member, which is a charged body. The conductive elastic layer preferably has the so-called crown shape, in which the layer thickness in the central portion is larger than the layer thickness in the end portion, in order to uniformly contact the photoreceptor in the transverse direction.

[Surface layer]

The surface layer of the charging member according to the present invention includes a polymer having a Si-O-Ti bond, a Ti-O-Ta bond, and a Si-O-Ta bond. The polymer has structural units represented by the following formulas (1), (2), and (3).

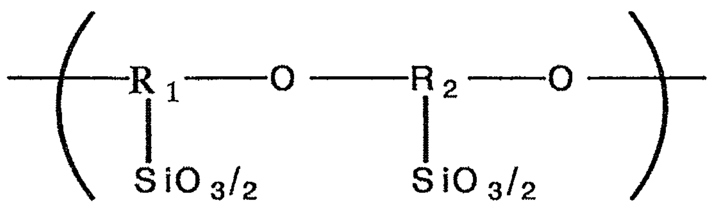

Formula 1

$TiO_{4/2}$ Formula (2)

$TaO_{5/2}$ Formula (3)

wherein $R_1$ and $R_2$ each independently represent any of the following formulas (4) to (7):

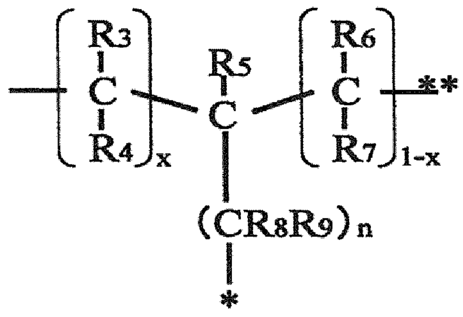

Formula (4)

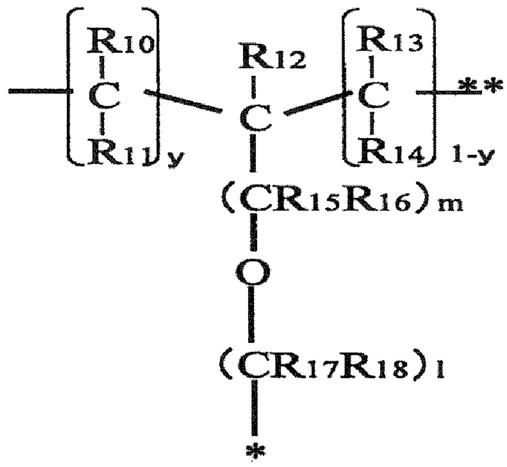

Formula (5)

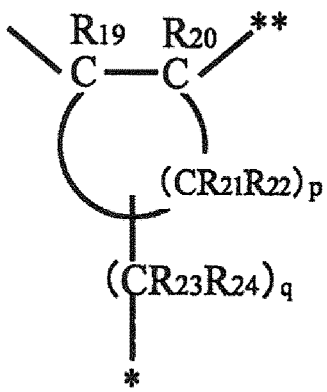

Formula (6)

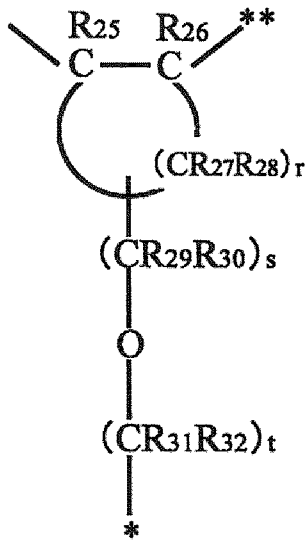

Formula (7)

wherein $R_3$ to $R_7$, $R_{10}$ to $R_{14}$, $R_{19}$, $R_{20}$, $R_{25}$ and $R_{26}$ each independently represent hydrogen, an alkyl group having 1 to 4 carbon atoms, a hydroxyl group, a carboxyl group, or an amino group; $R_8$, $R_9$, $R_{15}$ to $R_{18}$, $R_{23}$, $R_{24}$, and $R_{29}$ to $R_{32}$ each independently represent hydrogen or an alkyl group having 1 to 4 carbon atoms; $R_{21}$, $R_{22}$, $R_{27}$, and $R_{28}$ each independently represent hydrogen, an alkoxyl group having 1 to 4 carbon atoms, or an alkyl group having 1 to 4 carbon atoms; n, m, 1, q, s and t each independently represent an integer of not less than 1 and not more than 8, p and r each independently represent an integer of not less than 4 and not more than 12, and x and y each independently represent 0 or 1; and * and ** each represent a position at which a silicon atom and an oxygen atom in the formula (1) are bound.

As an example of the polymer according to the present invention, part of the structure of the polymer is shown in Fig. 7A wherein $R_1$ in the formula (1) has the structure represented by the formula (4), and $R_2$ has the structure represented by the formula (5).

As other example of the polymer according to the present invention, part of the structure of the polymer is shown in Fig. 7B wherein $R_1$ in the formula (1) has the structure represented by the formula (4), and $R_2$ has the structure represented by the formula (7).

If the polymer compound having the Si-O-Ti bond, the Ti-O-Ti bond, and the Si-O-Si bond and the structural unit represented by the formula (1) is used for the surface layer of the charging member, the charging member can stably supply the potential for its high dielectric constant without receiving an influence of the rotational speed of the drum during printing an image. In addition to this, the surface layer of the charging member according to the present invention has a reduced coefficient of kinetic friction because the polymer compound further contains Ta atoms and has the Ti-O-Ta bond and the Si-O-Ta bond. Moreover, friction is even because Si, Ti and Ta atoms are mixed at the molecular level. The properties do not demonstrate only by Si and Ti or only by Si and Ta, and are unique only to the polymer compound in which the three atoms of Si, Ti and Ta are bound via oxygen to each other. The surface layer formed with such a polymer compound is dense. Even if the surface layer is a thin film, bleeding of a low molecular component from the elastic layer can be suppressed.

In the polymer compound in the charging member according to the present invention, preferably, $R_1$ and $R_2$ in the formula (1) are each independently any selected from the structures represented by the following formulas (8) to (11).

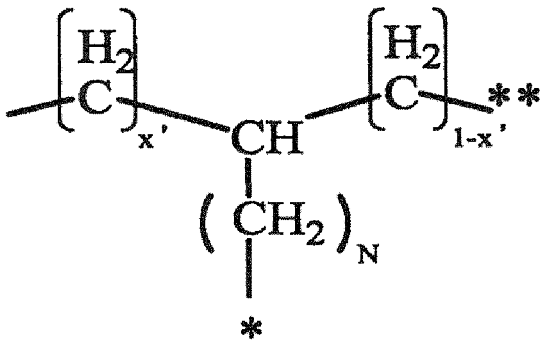

Formula (8)

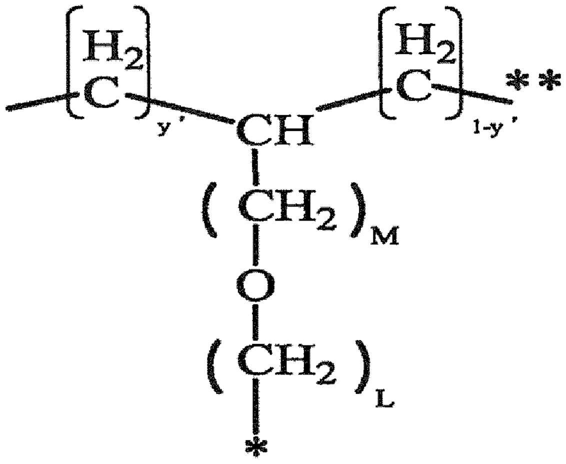

Formula (9)

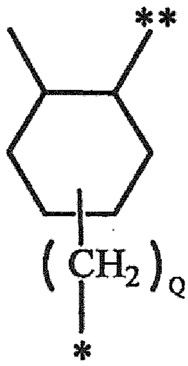

Formula (10)

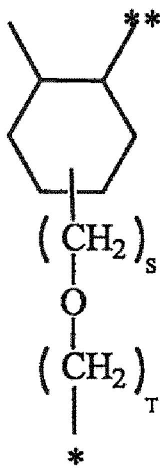

Formula (11)

wherein N, M, L, Q, S and T each independently represent an integer of not less than 1 and not more than 8, and x' and y' each independently represent 0 or 1; and * and ** each represent a position to be bound at in the formula (1).

[Atomic ratio]

In the polymer compound of the charging member according to the present invention, the ratio of the total number of atoms of titanium and tantalum to the number of atoms of silicon, (Ti + Ta)/Si, is preferably not less than 0.1 and not more than 5.0. At the range, the coefficient of kinetic friction of the surface layer can be significantly reduced.
The polymer compound of the charging member according to the present invention is preferably a crosslinked product of a hydrolyzable compound having the structure represented by the formula (12) and hydrolyzable compounds

having the structure represented by the formula (13) and the formula (14). In the case where the polymer compound of the present invention is such a crosslinked product, the respective components are mixed and bound at the molecular level, and the film is formed with the composition being likely to be even. Moreover, dense bond of the molecules is effective in preventing exudation or the like.

$R_{33}$-Si ($OR_{34}$) ($OR_{35}$) ($OR_{36}$) Formula (12)

Ti ($OR_{37}$) ($OR_{38}$) ($OR_{39}$) ($OR_{40}$) Formula (13)

Ta ($OR_{41}$) ($OR_{42}$) ($OR_{43}$) ($OR_{44}$) ($OR_{45}$) Formula (14)

wherein in the formula (12), $R_{33}$ represents any of the formulas (15) to (18) having an epoxy group, and $R_{34}$ to $R_{36}$ each independently represent a hydrocarbon group (such as an alkyl group having 1 to 4 carbon atoms); the hydrocarbon group may be linear, branched, or cyclic, and may have an unsaturated bond; in the formulas (13) and (14), $R_{37}$ to $R_{45}$ each independently represent a hydrocarbon group, or a hydrocarbon group substituted by at least any one of oxygen and nitrogen; and the hydrocarbon group may be linear, branched, or cyclic, and may have an unsaturated bond.

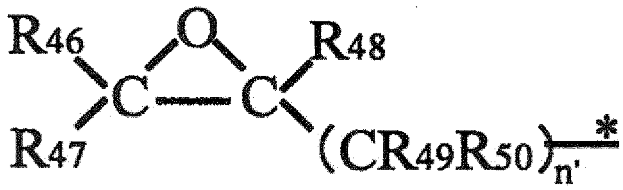

Formula (15)

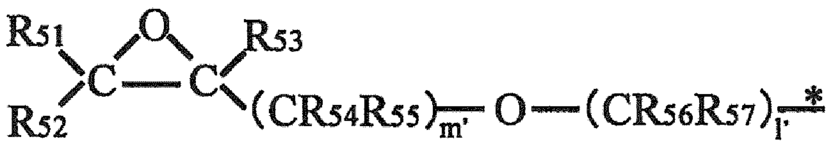

Formula (16)

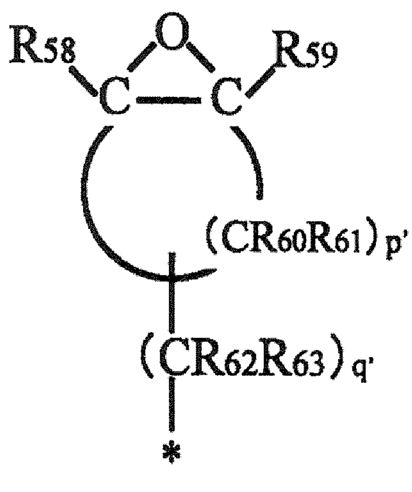

Formula (17)

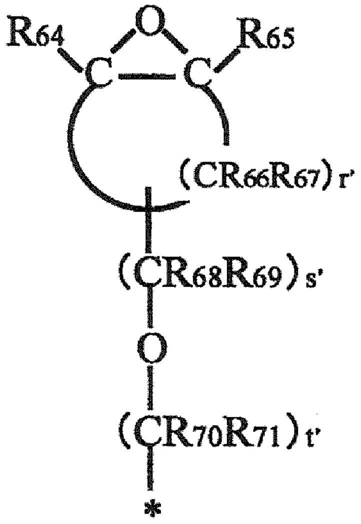

Formula (18)

wherein $R_{46}$ to $R_{48}$, $R_{51}$ to $R_{53}$, $R_{58}$, $R_{59}$, $R_{64}$, and $R_{65}$ each independently represent hydrogen, an alkyl group having 1 to 4 carbon atoms, a hydroxyl group, a carboxyl group, or an amino group; $R_{49}$, $R_{50}$, $R_{54}$ to $R_{57}$, $R_{62}$, $R_{63}$, and $R_{68}$ to $R_{71}$ each independently represent hydrogen or an alkyl group having 1 to 4 carbon atoms; $R_{60}$, $R_{61}$, $R_{66}$, and $R_{67}$ each independently represent hydrogen, an alkoxyl group having 1 to 4 carbon atoms, or an alkyl group having 1 to 4 carbon atoms; n', m', l' q', s', and t' each independently represent an integer of not less than 1 and not more than 8, and p' and r' each independently represent an integer of not less than 4 and not more than 12; and * represents a position at which the silicon atom in the formula (12) is bound.

Preferably, the polymer compound in the charging member according to the present invention is a crosslinked product of hydrolyzable compounds represented by the formulas (12), (13) and (14) and a hydrolyzable compound represented by the following formula (19).

$R_{72}$-Si ($OR_{73}$) ($OR_{74}$) ($OR_{75}$) Formula (19)

wherein $R_{72}$ represents an alkyl group having 1 to 21 carbon atoms or a phenyl group, and $R_{73}$ to $R_{75}$ each independently represent an alkyl group having 1 to 6 carbon atoms.

If the polymer compound according to the present invention is such a crosslinked product, the hardness of the film can be adjusted by the amount of the compound represented by the formula (19). A variety of properties can be given according to the kind of $R_{72}$. Particularly, in the case where $R_{72}$ is an alkyl group having 1 to 21 carbon atoms, solubility and applicability are preferably improved. In the case where $R_{72}$ is a phenyl group, electrical properties, and particularly volume resistivity is preferably improved.

[Production of surface layer]

The polymer compound according to the present invention is obtained as follows: a hydrolyzable condensate synthesized from the hydrolyzable compounds represented by the formulas (12), (13) and (14) is prepared, an epoxy group in $R_{33}$ of the hydrolyzable condensate is cleaved, and the hydrolyzable condensate is crosslinked. Alternatively, the polymer compound according to the present invention is obtained as follows: a hydrolyzable condensate synthesized from the hydrolyzable compounds represented by the formulas (12), (13), (14) and (19) is prepared, an epoxy group in $R_{33}$ of the hydrolyzable condensate is cleaved, and the hydrolyzable condensate is crosslinked. The charging member according to the present invention can be formed as follows: a coating film of a coating material containing the hydrolyzable condensate is formed on the elastic layer, and then, the hydrolyzable condensate in the coating film is crosslinked to form a surface layer.

Here, as a production example of the polymer compound according to the present invention, a method for forming a surface layer on an elastic layer will be more specifically described. The polymer compound is produced through the following steps (1) to (6). A component (A) is a hydrolyzable silane compound represented by the formula (12), a component (B) is a hydrolyzable silane compound represented by the formula (19), a component (C) is a hydrolyzable titanium compound represented by the formula (13), and a component (D) is a hydrolyzable tantalum compound represented by the formula (14).

(1): a step of adjusting the molar ratio of the components (A) and (B) to the components (C) and (D) {(C) + (D)}/{(A) + (B)} to not less than 0.1 and not more than 5.0;

(2): a step of mixing the component (A) with the component (B), adding water as the component (E) and alcohol as the component (F), and then performing hydrolysis and condensation by heating under reflux;

(3): a step of adding the components (C) and (D) to the solution subjected to the hydrolysis and condensation and mixing the solution;

(4): a step of adding a photopolymerization initiator as the component (G), and diluting the concentration of the solution with alcohol as the component (F) to obtain a coating agent (coating material);

(5): a step of applying the coating agent onto the elastic layer formed on the substrate; and

(6): a step of crosslinking the hydrolyzable condensate to cure the coating agent.

In the step (2), the components (A), (B), (C) and (D) may be added at the same time. In the hydrolyzable silane compound, only one component (A) may be used, and two or more of the components (A) or two or more of the components (B) may be used in combination.

Specific examples of the compound represented by the formula (12) include: 4-(1,2-epoxybutyl)trimethoxysilane, 5,6-epoxyhexyltriethoxysilane, 8-oxirane-2-yloctyltrimethoxysilane, 8-oxirane-2-yloctyltriethoxysilane, 3-glycidoxypropyltrimethoxysilane, 3-glycidoxypropyl triethoxysilane, 1-(3,4-epoxycyclohexyl)ethyltrimethoxysilane, 1-(3,4-epoxycyclohexyl)ethyltriethoxysilane, 3-(3,4-epoxycyclohexyl)methyloxypropyltrimethoxysilane, and 3-(3,4-epoxycyclohexyl)methyloxypropyltriethoxysilane.

Specific examples of the compound represented by the formula (19) include: methyltrimethoxysilane, methyltriethoxysilane, ethyltrimethoxysilane, ethyltriethoxysilane, propyltrimethoxysilane, propyltriethoxysilane, hexyltrimethoxysilane, hexyltriethoxysilane, hexyltripropoxysilane, decyltrimethoxysilane, decyltriethoxysilane, phenyltrimethoxysilane, phenyltriethoxysilane, and phenyltripropoxysilane.

Specific examples of the compound represented by the formula (13) include: titanium tetramethoxide, titanium tetraethoxide, titanium tetra-n-propoxide, titanium tetra-i-propoxide, titanium tetra-n-butoxide, titanium tetra-t-butoxide, titanium tetra-n-nonyloxide, titanium tetrastearyloxide, and titanium bis(triethanolamine)-diisopropoxide.

Specific examples of the compound represented by the formula (14) include: tantalum pentamethoxide, tantalum pentaethoxide, tantalum penta-n-butoxide, and tantalum tetraethoxidedimethylaminoethoxide.

Preferably, the molar ratio of the components {(C) + (D)}/(A) + (B)} is adjusted to not less than 0.1 and not more than 5.0, and it is effective in reduction in friction. The molar ratio is more preferably not less than 0.5 and not more than 3.0. At a molar ratio more than 5.0, the solution after synthesis is likely to be turbid or precipitated, and preservation properties are poor. The molar ratio can be expressed by the ratio of the number of atoms (Ti + Ta)/Si.

The amount of water as the component (E) to be added is preferably not less than 0.3 and not more than 6.0 in the molar ratio (E)/(A) + (B)}. The range of not less than 1.2 and not more than 3.0 is more preferable. At a molar ratio of not less than 0.3, condensation sufficiently progresses, and an unreacted remaining monomer is reduced. At a molar ratio of not more than 6.0, condensation progresses not too fast, and turbidity and precipitation are suppressed. An excessive amount of water as the component (E) increases the compatibility and polarity at the time of mixing with alcohol, and reduces the compatibility with the condensate. As a result, the solution after synthesis is likely to be turbid or precipitated as described above.

As alcohol as the component (F), primary alcohol, secondary alcohol, tertiary alcohol, a mixture of primary alcohol and secondary alcohol, and a mixture of primary alcohol and tertiary alcohol are preferably used. Particularly, ethanol, a mixed solution of methanol and 2-butanol, and a mixed solution of ethanol and 2-butanol are preferable.

As the photopolymerization initiator as the component (G), onium salts of Lewis acids or Bronsted acids are preferably used. Examples of other cationic polymerization catalyst include borate salts, compounds having an imide structure, compounds having a triazine structure, azo compounds, and peroxide. The photopolymerization initiator is preferably diluted in advance by a solvent such as alcohol and ketone in order to improve the compatibility with the coating agent. As the solvent, methanol and methyl isobutyl ketone are preferable. Among a variety of the cationic polymerization catalyst, aromatic sulfonium salts and aromatic iodonium salts are preferable from the viewpoint of sensitivity, stability and reactivity. Particularly, preferable are bis(4-tert-butylphenyl)iodonium salts, a compound having the structure represented by the formula (20) below (trade name: ADEKA OPTOMER-SP150, made by Adeka Corporation), and a compound having a structure represented by the formula (21) below (trade name: IRGACURE 261, made by BASF SE).

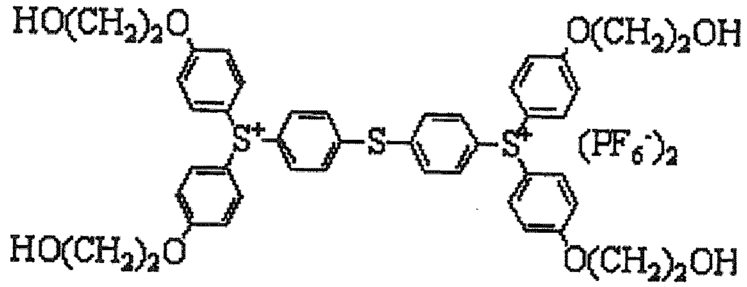

Formula (20)

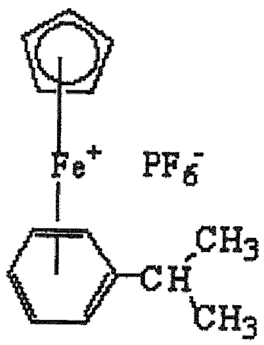

Formula (21)

The polymer compound thus synthesized is adjusted to have a proper concentration in order to improve applicability, and used as the coating agent. Examples of the solvent suitable for adjustment of the concentration include alcohols such as ethanol, methanol and 2-butanol, ethyl acetate, ketones such as methyl ethyl ketone and methyl isobutyl ketone, or a mixture thereof. Particularly, a mixed solution of ethanol or methanol and 2-butanol and a mixed solution of ethanol and 2-butanol are preferable.

[Formation of surface layer]

The coating agent thus prepared is applied onto the conductive elastic layer by a method such as roll coating with roll coater, dip coating, and ring coating to form a coating layer. The coating layer is irradiated with an activated energy beam to cleave and polymerize a cationic polymerizable group in the silane condensate contained in the coating agent. Thereby, the silane condensates are crosslinked to each other and cured to form the surface layer. Such a polymer compound obtained by the cationic polymerization has a crosslinking structure represented by the formula (1), in which a Si atom bound to an organic group ($R_1$ or $R_2$) is bound to other three atoms (Si, Ti, and Ta) via oxygen.

The crosslinking and curing reaction in the process of forming the polymer compound according to the present invention will be specifically described using Fig. 6.

For example, the condensate obtained by hydrolyzing 3-glycidoxypropyltrimethoxysilane as the component (A), the component (B), and the component (C) has an epoxy group as the cationic polymerizable group. In the epoxy group of the hydrolyzable condensate, the epoxy ring is opened in the presence of cationic polymerization catalyst (in Fig. 6, expressed as $R^+X^-$), and polymerization progresses as a chain reaction. As a result, polysiloxanes having the Si-O-Ti bond, the Ti-O-Ta bond and the Si-O-Ta bond are crosslinked to each other, and cured to form the polymer compound according to the present invention. In Fig. 6, n represents an integer of not less than 1.

A preferable activated energy beam is ultraviolet light. Unlike the case of thermal curing, if the surface layer is cured by the ultraviolet light, excessive heat is unlikely to be produced, and phase separation and wrinkles during volatilization of a solvent are unlikely to be produced. Accordingly, a very uniform state of the film is obtained. For this reason, the potential can be given to a photoreceptor uniformly and stably.

In the case where the environment for the charging member is an environment with drastic change in temperature and humidity, unless the surface layer sufficiently follows expansion and shrinkage of the conductive elastic layer caused by the change in temperature and humidity, a wrinkle or crack may be produced on the surface layer. If the crosslinking reaction is performed by the ultraviolet light having less heat to be produced, however, the adhesiveness of the conductive elastic layer to the surface layer is increased, and the surface layer sufficiently can follow expansion and shrinkage of the conductive elastic layer. Accordingly, a wrinkle or crack of the surface layer caused by the environmental change in temperature and humidity can also be suppressed. If the crosslinking reaction is performed by the ultraviolet light,

deterioration in the conductive elastic layer due to the thermal history can be suppressed. Accordingly, reduction in the electrical properties of the conductive elastic layer can also be suppressed.

For irradiation with the ultraviolet light, a high-pressure mercury lamp, a metal halide lamp, a low-pressure mercury lamp, and an excimer UV lamp can be used, for example. Among these, an ultraviolet light source largely containing the ultraviolet light at a wavelength of not less than 150 nm and not more than 480 nm is used. The fluence of the ultraviolet light is defined as follows: fluence of ultraviolet light [$mJ/cm^2$] = intensity of ultraviolet light [$mW/cm^2$] $\times$ irradiation time [s]

The fluence of the ultraviolet light can be adjusted by the irradiation time, the output of the lamp, and the distance between the lamp and an object to be irradiated. The fluence may have a gradient within the irradiation time. In the case where a low-pressure mercury lamp is used, the fluence of the ultraviolet light can be measured using an accumulated ultraviolet light meter UIT-150-A or UVD-S254 (both are trade names) made by Ushio Inc. In the case where an excimer UV lamp is used, the fluence of the ultraviolet light can be measured using an accumulated ultraviolet light meter UIT-150-A or VUV-S172 (both are trade names) made by Ushio Inc.

The thickness of the surface layer is preferably not less than 10 nm and not more than 100 nm as a guideline. At a thickness within the range, a crack caused by uneven coating or cure shrinkage is unlikely to be produced, and bleeding from the conductive elastic layer can be more effectively suppressed.

[Measurement of coefficient of kinetic friction]

The coefficient of kinetic friction of the surface of the charging member layer is preferably not less than 0.1 and not more than 0.3 in the measurement to a polyethylene terephthalate (PET) sheet. At a coefficient of kinetic friction within the range, followability with a photoreceptor drum is high, and slip is unlikely to occur. Accordingly, the photoreceptor drum can be stably charged. Fig. 3 shows an apparatus for measuring a coefficient of kinetic friction. In Fig. 3, a charging member 201 to be measured is in contact with a belt 202 (thickness of 100 $\mu$m, width of 30 mm, length of 180 mm, formed with PET (trade name: Lumirror S10 #100, made by Toray Industries, Inc.) at a predetermined angle $\theta$. A weight 203 is provided at one end of the belt 202, and a load meter 204 is provided at the other end thereof. The load meter 204 is connected to a recorder 205. The coefficient of kinetic friction is determined by the following equation wherein when the charging member 201 is rotated in a predetermined direction and at a predetermined rate in the state shown in Fig. 3, a force measured by the load meter 204 is F [grams-force], and the sum of the weight of the weight and the weight of the belt is W [grams-force]. The measurement method is according to the Euler's belt formula:

$$\text{Coefficient of kinetic friction} = (1/\theta)\ln(F/W)$$

In the present invention, W = 100 [grams-force], the rotational speed of the charging member is 115 rpm, and the measurement environment is 23°C/50%RH.

[Electrophotographic apparatus and process cartridge]

With reference to Fig. 2, a schematic configuration of an electrophotographic apparatus and process cartridge using the charging member according to the present invention as a charging roller will be described. A rotary drum electrophotographic photosensitive member (photoreceptor) 21 is an image bearing member. The photoreceptor 21 is rotated and driven clockwise as shown by the arrow in the drawing at a predetermined circumferential speed (process speed). As the photoreceptor 21, a known photoreceptor including at least a roll-shaped conductive substrate, a photosensitive layer containing an inorganic photosensitive material or organic photosensitive material on the substrate, for example, may be used. The photoreceptor 21 may further have a charge-injecting layer for charging the surface of the photoreceptor at a predetermined polarity and potential.

A charging unit includes a charging roller 22, and a charge bias applying power supply S2 that applies a charge bias to the charging roller 22. The charging roller 22 is in contact with the photoreceptor 21 at a predetermined pressing pressure, and is rotated and driven in the forward direction with respect to the rotation of the photoreceptor 21 in the present example. A predetermined DC voltage (-1050 V in the present example) is applied to the charging roller 22 from the charge bias applying power supply S2 (DC charging method). Thereby, the surface of the photoreceptor 21 is uniformly charged at a predetermined polarity and potential (dark potential of -500 V in the present example).

For an exposing unit 23, a known unit can be used. Suitable examples thereof can include a laser beam scanner. The reference numeral L represents exposure light. The surface to be charged of the photoreceptor 21 is exposed by the exposing unit 23 according to the information on a target image. Thereby, the potential of the exposed bright portion of the surface to be charged in the photoreceptor (bright potential of -150 V in the present example) is selectively reduced

(attenuated) to form an electrostatic latent image on the photoreceptor 21.

For a reversal developing unit, a known unit can be used. For example, a developing unit 24 in the present example includes a toner carrier 24a that is arranged in an opening of a developing container that accommodates a toner and carries and conveys the toner, a stirring member 24b that stirs the toner accommodated, and a toner regulating member 24c that regulates the amount of the toner to be carried by the toner carrier (thickness of the toner layer). The developing unit 24 selectively applies the toner (negative toner) charged at the same polarity as the charge polarity of the photoreceptor 21 to the exposed bright portion of the electrostatic latent image on the surface of the photoreceptor 21 to visualize the electrostatic latent image as a toner image (developing bias of -400 V in the present example). As a developing method, a known jumping developing method, contact developing method, and magnetic brush method can be used. In an electrophotographic apparatus that outputs a color image, preferable is use of the contact developing method that can improve scattering of the toner.

For a transfer roller 25, a transfer roller formed by coating a metallic conductive substrate or the like with an elastic resin layer prepared so as to have middle resistance can be used. The transfer roller 25 is in contact with the photoreceptor 21 at a predetermined pressing pressure, and is rotated in the forward direction with respect to the rotation of the photoreceptor 21 at almost the same circumferential speed as the rotational circumferential speed of the photoreceptor 21. A transfer voltage having a polarity opposite to the charge polarity of the toner is applied from the transfer bias applying power supply S4. A transfer material P is fed to the contacting portion of the photoreceptor 21 and the transfer roller from a sheet feeding mechanism not shown at a predetermined timing. The rear surface of the transfer material P is charged at a polarity opposite to the charge polarity of the toner by the transfer roller 25 that applies the transfer voltage. Thereby, in the contacting portion of the photoreceptor 21 and the transfer roller, the toner image on the surface of the photoreceptor 21 is statically transferred onto the surface of the transfer material P.

The transfer material P having the transferred toner image is separated from the surface of the photoreceptor, guided to a toner image fixing unit not shown to fix the toner image, and output as an image forming product. In the cases of a double-sided image forming mode and a multi image forming mode, the image forming product is introduced to a recirculation conveying mechanism not shown, and reintroduced to the transfer unit. A residue on the photoreceptor 21 such as a transfer remaining toner is recovered by a cleaning unit 26 such as a blade from the photoreceptor. The process cartridge according to the present invention integrally supports the photoreceptor 21 and the charging member 22 according to the present invention disposed in contact with the photoreceptor 21, and is detachably attached to the main body of the electrophotographic apparatus.

**Examples**

Hereinafter, using specific Examples, the present invention will be described more in detail. "Parts" in Examples mean "parts by mass."

(Example 1)

[1] Formation of conductive elastic layer and evaluation

Table 1

| Raw materials | Amount to be used |
|---|---|
| Medium and high nitrile NBR [trade name: Nipol DN219, median of amount of bound acrylic nitrile of 33.5%, median of Mooney viscosity of 27, made by ZEON Corporation] | 100 Parts |
| Carbon black for color (filler) [trade name: #7360SB, particle size of 28 nm, nitrogen adsorbing specific surface area of 77 $m_2$/g, DBP absorption of 87 $cm^3$/100 g, made by Tokai Carbon Co., Ltd.] | 48 Parts |
| Calcium carbonate (filler) [trade name: Nanox #30, made by Maruo Calcium Co., Ltd.] | 20 Parts |
| Zinc oxide | 5 Parts |
| Stearic acid | 1 Part |

The components shown in Table 1 were mixed by a 6-L pressurized kneader (apparatus used: TD6-15 MDX, made by Toshin Co., Ltd.) at a filling rage of 70% by volume and the number of rotation of the blade of 30 rpm for 24

minutes to obtain an unvulcanized rubber composition. To 174 parts by mass of the unvulcanized rubber composition, 4.5 parts of tetrabenzylthiuram disulfide [trade name: Sanceler TBzTD, made by Sanshin Chemical Industry Co., Ltd.] as a vulcanization accelerator and 1.2 parts of sulfur as a vulcanizing agent were added. Using an open roll mill having a roll diameter of 12 inches, turning in the horizontal direction was performed 20 times in total at the number of rotation of a front roll of 8 rpm and the number of rotation of a back roll of 10 rpm, and an interval between the rolls of 2 mm. Subsequently, tight milling was performed 10 times at an interval between the rolls of 0.5 mm to obtain a kneaded product I for a conductive elastic layer.

Next, a cylindrical steel support having a diameter of 6 mm and a length of 252 mm (with a nickel-plated surface) was prepared. The region from the center of the cylinder surface to the portions 115.5 mm from the sides in the axial direction in the support (region with a width of 231 mm in total in the axial direction) was coated with a thermosetting adhesive including a metal and a rubber (trade name: METALOC U-20, made by Toyokagaku Kenkyusho, Co., Ltd.). The thermosetting adhesive was dried for 30 minutes at a temperature of 80°C, and further dried for 1 hour at a temperature of 120°C.

Next, using a crosshead extruder, the kneaded product I was extruded onto the substrate having the adhesive layer coaxially with the substrate into a cylindrical shape having an outer diameter of 8.75 to 8.90 mm. Both ends were cut to produce a conductive elastic roller in which an unvulcanized conductive elastic layer was laminated on the outer periphery of the substrate. As the extruder, an extruder having a cylinder diameter of 70 mm and L/D = 20 was used. For the adjustment of the temperature during extrusion, the temperature of the head was 90°C, the temperature of the cylinder was 90°C, and the temperature of the screw was 90°C.

Next, the roller was vulcanized using a continuous heating furnace having two zones in which the temperature in one zone was different from the temperature in the other zone. The first zone was set at a temperature of 80°C, and the roller was passed through the first zone in 30 minutes. The second zone was set at a temperature of 160°C, and the roller was passed through the second zone in 30 minutes as well. Thus, a vulcanized conductive elastic roller was obtained.

Next, both ends of the conductive elastic layer portion (rubber portion) of the conductive elastic roller before grinding the surface were cut off such that the width in the axial direction of the conductive elastic layer portion might be 232 mm. Subsequently, the surface of the conductive elastic layer portion was ground by a rotary grinding wheel (the number of rotation of a work piece of 333 rpm, the number of rotation of the grinding wheel of 2080 rpm, grinding time of 12 seconds). Thereby, a conductive elastic roller (conductive elastic roller after grinding the surface) having a crown shape with the diameter of the end portion of 8.26 mm and the diameter of the central portion of 8.50 mm was obtained, in which the ten-point height of irregularities (Rz) of the surface was 5.5 $\mu$m, run-out was 18 $\mu$m, and the hardness was 73 degrees (MD-1).

The ten-point height of irregularities (Rz) was measured according to JIS B 0601 (1994). The run-out was measured using a high precision laser measuring apparatus LSM-430v made by Mitutoyo Corporation. Specifically, the outer diameter was measured using the measuring apparatus, and the difference between the largest outer diameter and the smallest outer diameter was defined as the run-out of the difference in the outer diameter. The measurement was performed at five points, and the average of the run-outs of the difference in five outer diameters was defined as the run-out of the object to be measured.

The MD-1 hardness was measured in a measurement environment of 25°C/55%RH under the condition that a press needle of an MD-1 type durometer (made by Kobunshi Keiki Co., Ltd.) was in contact with the surface of the object to be measured and a load of 1000 g was applied.

[2] Production of condensate and evaluation Next, a treatment agent for forming a surface layer was synthesized.

(Synthesis-1)

First, the components shown in Table 2 below were mixed, and were stirred at room temperature for 30 minutes.

Table 2

| Raw materials | Amount to be used |
|---|---|
| Glycidoxypropyltrimethoxysilane (GPTMS, abbreviated to "EP-1.") (hydrolyzable silane compound) [trade name: KBM-403, made by Shin-Etsu Chemical Co., Ltd.] | 11.56g (0.049mol) |
| Hexyltrimethoxysilane (HeTMS, abbreviated to "He.") "hydrolyzable silane compound" [trade name: KBM-3063, made by Shin-Etsu Chemical Co., Ltd.] | 62.08g (0.301mol) |
| Ion exchange water | 11.33g |

(continued)

| Raw materials | Amount to be used |
|---|---|
| Ethanol [made by KISHIDA CHEMICAL Co., Ltd., super grade] | 91.82g |

Subsequently, using an oil bath, heating under reflux was performed at 120°C for 20 hours to obtain a condensate intermediate body I. The theoretical solid content of the condensate intermediate body I (mass ratio of a polysiloxane polymerized product based on the total weight of the solution if all the hydrolyzable silane compounds are dehydration condensed) is 28.0% by mass.

(Synthesis-2)

Next, to the condensate intermediate body I: 73.89 g cooled to room temperature, titanium isopropoxide (hereinafter, referred to as Ti-1) (hydrolyzable titanium compound) [made by Gelest, Inc.]: 87.49 g (0.324 mol) and tantalum ethoxide (hereinafter, referred to as Ta-1) (hydrolyzable tantalum compound) [made by Gelest, Inc.]: 19.80 g (0.049 mmol) were added, and stirred at room temperature for 3 hours to finally obtain a condensate 1. A series of stirring was performed at 750 rpm. The molar ratio of Si:Ti:Ta is 30:60:10, and (Ti + Ta)/Si = 2.33.

[Evaluation 1] evaluation of appearance of solution of condensate:

About the condensate 1, the appearance of the solution after one month when the solution was synthesized was evaluated according to the criterion below. The result is shown in Table 4.

A: neither turbidity nor precipitation is found after the solution is left for one month.
B: turbidity is slightly found after 2 weeks or so.
C: turbidity is slightly found after 1 week or so.
D: turbidity and precipitation are produced at the time of synthesis.

[Evaluation 2] evaluation of chemical structure of condensate:

Next, using $^{29}$Si-NMR and $^{13}$C-NMR measurement, it was found that the condensate 1 has the structure represented by the formula (1) [apparatus used: JMN-EX400, made by JEOL, Ltd.]. A method for producing a sample to be measured is as follows.

First, as a photo cationic polymerization initiator, 0.7 g of an aromatic sulfonium salt (trade name: ADEKA OPTOMER SP-150, made by Adeka Corporation) diluted by methanol to be 10% by mass was added to 25 g of the condensate 1. Further, to the obtained solution, a mixed solution of ethanol and 2-butanol (ethanol:2-butanol = 1:1 (mass ratio)) was added, and diluted such that the theoretical solid content might be 7.0% by mass. The diluted solution of the condensate 1 was applied onto the degreasing surface of an aluminum sheet having a thickness of 100 $\mu$m by the spin coating. As a spin coater, a 1H-D7 [made by Mikasa Co., Ltd.] was used. As the condition for spin coating, the number of rotation was 300 rpm, and the rotation time was 2 seconds.

The coating film of the solution applied on the surface of the aluminum sheet was dried, and the coating film was irradiated with the ultraviolet light at a wavelength of 254 nm such that an fluence might be 9000 mJ/cm$^2$. Thereby, the condensate 1 was crosslinked, and the coating film was cured. In the irradiation with the ultraviolet light, a low-pressure mercury lamp (made by Harison Toshiba Lighting Corporation) was used.

The cured coating film was separated from the aluminum sheet, and crushed using an agate mortar. The obtained product was used as a sample to be measured for NMR.

The spectrum obtained by the $^{29}$Si-NMR measurement is shown in Fig. 4. Fig. 4 also shows the peak obtained by waveform separation of the spectrum. The peaks in the vicinity of -64 ppm to -74 ppm indicate the T3 component. Here, the T3 component shows the state where Si having one bond to an organic functional group has three bonds to other atoms (Si, Ti, and Ta) via O. From Fig. 4, it was found that there exists a species in which a hydrolyzable silane compound having an organic chain containing an epoxy group is condensed and exists in a state of $-SiO_{3/2}$.

The spectrum obtained by the $^{13}$C-NMR measurement is shown in Fig. 5. The peak indicating an epoxy group before ring-opening appears in the vicinity of 44 ppm and 51 ppm, and the peak after ring-opening polymerization appears in the vicinity of 69 ppm and 72 ppm. From Fig. 5, it was found that the epoxy groups are polymerized while those not subjected to the ring-opening hardly remain. From the $^{29}$Si-NMR and $^{13}$C-NMR above, it was found that the condensate 1 has the structure represented by the formula (1) within the cured film.

[3] Formation of surface layer and evaluation

First, a method for producing a coating material for formation of a surface layer will be described. As a photo cationic polymerization initiator, 0.7 g of an aromatic sulfonium salt [trade name: ADEKA OPTOMER SP-150, made by Adeka Corporation] diluted by methanol to be 10% by mass was added to 25 g of the condensate 1. Further, to the obtained solution, a mixed solution of ethanol and 2-butanol (ethanol:2-butanol = 1:1 (mass ratio)) was added, and diluted such that the solid content might be 3.0% by mass. This was used as a coating material 1 for formation of a surface layer.

Subsequently, using the coating material 1, a charging roller 1 was produced by the following method. First, the coating material 1 was applied onto the conductive elastic layer of the conductive elastic roller 1 (after grinding the surface) by ring coating (amount to be discharged: 0.120 ml/s, speed of the ring portion: 85 mm/s, total amount to be discharged: 0.130 ml). The coating material 1 was irradiated with the ultraviolet light at a wavelength of 254 nm such that an fluence might be 9000 mJ/cm$^2$. Thereby, the coating film of the coating material 1 was cured (cured by a crosslinking reaction) to form a surface layer. In the irradiation with the ultraviolet light, a low-pressure mercury lamp [made by Harison Toshiba Lighting Corporation] was used. Using the charging roller 1 thus obtained, [Evaluation 3] to [Evaluation 7] below were made.

[Evaluation 3] evaluation of applicability to charging roller:

Appearance of the surface of the charging roller was observed visually, and evaluated according to the criterion below. The result of the evaluation is shown in Table 4.

A: the surface of the charging roller has no coating deficit.
B: the surface of the charging roller partially has coating deficit.
C: the surface of the charging roller entirely has coating deficit.

[Evaluation 4] evaluation of coefficient of kinetic friction:

Using the measuring apparatus in Fig. 3, the coefficient of kinetic friction of the charging roller 1 was measured. The measurement condition is as described above. The result of the evaluation is shown in Table 4.

[Evaluation 5] Recognition of Si-O-Ti, Si-O-Ta, and Ti-O-Ta bonds:

Subsequently, presence of the Si-O-Ti, Si-O-Ta, and Ti-O-Ta bonds within the surface of the charging roller layer was found by ESCA. (apparatus used: Quantum 2000, made by ULVAC-PHI, Inc.) The surface of the roller was irradiated with an X ray, and the state of the bond within the surface layer was evaluated.

From the detected O1s spectrum, presence of the Si-O-Ti, Si-O-Ta, and Ti-O-Ta bonds was found.

[4] Durability test

The charging roller was mounted on a process cartridge used for a laser beam printer [trade name: LBP7200C, made by Canon Inc.], and left as it was under a high temperature and high humidity environment (temperature of 40°C, relative humidity of 95%) for one month. Subsequently, 10000 sheets of an image were output in a low temperature and low humidity environment (temperature of 15°C/humidity of 10%RH).

[Evaluation 6] evaluation of output image after durability test:

According to the criterion below, the 10000th output image was evaluated. The result is shown in Table 4. The output electrophotographic image was such an image that an alphabet letter "E" of 4 point in size might be formed on a paper of an A4 size at a coverage rate of 1%. The electrophotographic image was formed in an intermittent mode. Specifically, every time when two sheets of the electrophotographic image were output, an electrophotographic photosensitive drum was rotated for 10 seconds without outputting the electrophotographic image. Compared to a continuous formation of an image, formation of an image in such an intermittent mode has the larger number of friction between the charging roller and the electrophotographic photosensitive drum even if the number of sheets to be output is the same. For this reason, this is more severe evaluation condition for dirt of the surface of the charging roller. The process speed was 115.5 mm/s.

A: no horizontal streak resulting from charging caused by dirt on the surface of the charging roller is found on the image.

B: a horizontal streak resulting from charging caused by dirt on the surface of the charging roller is slightly found within 3 cm of an end portion of the image.
C: a horizontal streak resulting from charging caused by dirt on the surface of the charging roller is slightly found within 5 cm of an end portion of the image.
D: a horizontal streak resulting from charging caused by dirt on the surface of the charging roller is found within 5 cm of an end portion of the image, and the streak is larger.
E: a horizontal streak resulting from charging caused by dirt on the surface of the charging roller is found all over the surface of the charging roller, and the streak is larger. Specifically, charging unevenness as white fine horizontal streaks is found.

[Evaluation 7] evaluation of appearance of roller after durability test:

After 10000 sheets of the image were printed, the charging roller was taken out from the process cartridge, visually observed, and the degree of dirt on the surface was evaluated according to the criterion below. The result is shown in Table 4.

A: no dirt is found.
B: slight dirt is found only in the end of the roller.
C: dirt is found only in the end of the roller.
D: dirt is found all over the roller.

(Example 2) to (Example 48)

As the hydrolyzable silane compound, the hydrolyzable titanium compound, and the hydrolyzable tantalum compound, those having the chemical structure shown in Table 5 were used. The amounts of these components, water, and alcohol to be blended were changed to the values shown in Table 3. Except those, a condensate was synthesized in the same manner as in Example 1. Further, a coating material for formation of a surface layer was prepared in the same manner as in Example 1, and the charging rollers 2 to 48 were produced. The value of (Ti + Ta)/Si at the time of synthesis is shown in Table 3-1 and Table 3-2. The result of each evaluation made in the same manner as in Example 1 is shown in Table 4. In each Example, as in the case of Example 1, the structure represented by the formula (1) and the Si-O-Ti, Si-O-Ta, and Ti-O-Ta bonds were found. Each Example has an AA rank in [Evaluation 8] evaluation of posi ghost.

(Comparative Example 1)

A charging roller 49 was produced in the same manner as in Example 1 except that the respective components in production of the condensate (Synthesis 1) were blended at the values in Table 6, and Synthesis 2 of adding the hydrolyzable titanium compound and the hydrolyzable tantalum compound was omitted. The result of each evaluation made in the same manner as in Example 1 is shown in Table 6.

(Comparative Example 2)

Ti-1, water, and ethanol were blended as shown in Table 6, and the mixed solution was stirred at room temperature for 3 hours. The obtained condensate was precipitated, and was not suitable for a coating solution. Accordingly, a charging roller was not produced.

(Comparative Example 3)

Ta-1, water, and ethanol were blended as shown in Table 6, and the mixed solution was stirred at room temperature for 3 hours. The obtained condensate was precipitated, and was not suitable for a coating solution. Accordingly, a charging roller was not produced.

Table 3-1

| Example | Amount to be added/g | | | | | | | | | | | | | (Ti + Ta)/Si ratio of the number of atoms |
|---|---|---|---|---|---|---|---|---|---|---|---|---|---|---|
| | Synthesis-1 | | | | | | | | Synthesis-2 | | | | | |
| | Component (A) | | | | Component (B) | | Water | EtOH | Synthesis-1 solution | Ti | | Ta | | |
| | EP-1 | EP-2 | EP-3 | EP-4 | He | Ph | | | | Ti-1 | Ti-2 | Ta-1 | Ta-2 | |
| 1 | 11.56 | - | - | | 62.08 | - | 11.33 | 91.82 | 73.54 | 83.56 | | 19.70 | - | 2.33 |
| 2 | 11.56 | - | - | - | 62.08 | - | 111.33 | 91.82 | 109.46 | 49.75 | - | 17.60 | - | 1.00 |
| 3 | 11.56 | - | - | - | 62.08 | - | 111.33 | 91.82 | 64.26 | 102.21 | - | 10.33 | - | 3.00 |
| 4 | 11.56 | - | - | - | 62.08 | - | 111.33 | 91.82 | 135.86 | 32.75 | - | 8.19 | - | 0.50 |
| 5 | 11.56 | - | - | - | 62.08 | - | 11.33 | 91.82 | 61.11 | 76.38 | - | 39.30 | - | 3.00 |
| 6 | 11.56 | - | - | - | 62.08 | - | 11.33 | 91.82 | 109.00 | 33.90 | - | 33.90 | - | 0.93 |
| 7 | 11.56 | - | - | - | 62.08 | - | 11.33 | 91.82 | 45.28 | 120.62 | - | 10.90 | - | 4.99 |
| 8 | 11.56 | - | - | - | 62.08 | - | 11.33 | 91.82 | 164.28 | 5.19 | - | 7.34 | - | 0.11 |
| 9 | 11.56 | - | - | - | 62.08 | - | 11.33 | 91.82 | 42.95 | 92.50 | - | 41.35 | - | 4.99 |
| 10 | 11.56 | - | - | - | 62.08 | - | 11.33 | 91.82 | 141.19 | 5.35 | - | 30.27 | - | 0.33 |
| 11 | 11.56 | - | - | - | 62.08 | - | 11.33 | 91.82 | 41.52 | 75.30 | - | 59.97 | - | 4.99 |
| 12 | 11.56 | - | - | - | 62.08 | - | 11.33 | 91.82 | 90.02 | 34.71 | - | 52.06 | - | 1.40 |
| 13 | 11.56 | - | - | - | 62.08 | - | 11.33 | 91.82 | 124.97 | 5.46 | - | 46.37 | - | 0.54 |
| 14 | 11.56 | - | - | - | 62.08 | - | 11.33 | 91.82 | 52.94 | 119.54 | - | 4.32 | - | 4.08 |
| 15 | 11.56 | - | - | - | 62.08 | - | 11.33 | 91.82 | 91.16 | 81.78 | - | 3.86 | - | 1.63 |
| 16 | 11.56 | - | - | - | 62.09 | - | 11.33 | 91.82 | 166.47 | 7.39 | - | 2.94 | - | 4.04 |
| 17 | 11.56 | - | - | - | 62.08 | - | 11.33 | 91.82 | 32.20 | 122.46 | - | 22.13 | - | 7.55 |
| 18 | 11.56 | - | - | - | 62.08 | - | 11.33 | 91.82 | 164.06 | 1.13 | - | 11.61 | - | 0.10 |
| 19 | 11.56 | - | - | - | 62.08 | - | 11.33 | 91.82 | 25.92 | 88.36 | - | 62.51 | - | 9.00 |
| 20 | 11.56 | - | - | - | 62.08 | - | 11.33 | 91.82 | 130.09 | 1.18 | - | 45.53 | - | 0.45 |
| 21 | 11.56 | - | - | - | 62.08 | - | 11.33 | 91.82 | 40.85 | 67.13 | - | 68.83 | - | 4.99 |
| 22 | 11.56 | - | - | - | 62.08 | - | 11.33 | 91.82 | 116.60 | 5.52 | - | 54.68 | - | 0.67 |

(continued)

| Example | Amount to be added/g | | | | | | | | | | | | | (Ti + Ta)/Si ratio of the number of atoms |
|---|---|---|---|---|---|---|---|---|---|---|---|---|---|---|
| | Synthesis-1 | | | | | | | | Synthesis-2 | | | | | |
| | Component (A) | | | | Component (B) | | Water | EtOH | Synthesis-1 solution | Ti | | Ta | | |
| | EP-1 | EP-2 | EP-3 | EP-4 | He | Ph | | | | Ti-1 | Ti-2 | Ta-1 | Ta-2 | |
| 23 | 11.56 | - | - | - | 62.08 | - | 11.33 | 91.82 | 56.22 | 36.16 | - | 84.42 | - | 3.00 |
| 24 | 11.56 | - | - | - | 62.08 | - | 111.33 | 91.82 | 27.21 | 37.40 | - | 112.19 | - | 7.55 |

Table 3-2

| Example | Amount to be added/g | | | | | | | | | | | | | (Ti + Ta)/Si ratio of the number of atoms |
|---|---|---|---|---|---|---|---|---|---|---|---|---|---|---|
| | Synthesis -1 | | | | | | | | Synthesis -2 | | | | | |
| | Component (A) | | | | Component (B) | | Water | EtOH | Synthesis-1 solution | Ti | | Ta | | |
| | EP-1 | EP-2 | EP-3 | EP-4 | He | Ph | | | | Ti-1 | Ti-2 | Ta-1 | Ta-2 | |
| 25 | 11.56 | - | - | - | 62.08 | - | 11.33 | 91.82 | 71.89 | 5.83 | - | 99.07 | - | 1.86 |
| 26 | 11.56 | - | - | - | 62.08 | - | 11.33 | 91.82 | 35.80 | 6.09 | - | 134.92 | - | 4.99 |
| 27 | - | 9.83 | - | - | 64.91 | - | 11.85 | 80.38 | 69.21 | 87.06 | - | 20.53 | - | 2.33 |
| 28 | - | 9.83 | - | - | 64.91 | - | 11.85 | 80.38 | 105.17 | 52.92 | - | 18.72 | - | 1.00 |
| 29 | - | 9.83 | - | - | 64.91 | - | 11.85 | 80.38 | 60.16 | 105.94 | - | 10.71 | - | 3.00 |
| 30 | - | 9.83 | - | - | 64.91 | - | 11.85 | 80.38 | 132.58 | 35.38 | - | 8.84 | - | 0.50 |
| 31 | - | 9.83 | - | - | 64.91 | - | 11.85 | 80.38 | 57.11 | 79.03 | - | 40.66 | - | 3.00 |
| 32 | - | 9.83 | - | - | 64.91 | - | 11.85 | 80.38 | 104.70 | 36.05 | - | 36.05 | - | 0.93 |
| 33 | - | - | 15.00 | - | 59.69 | - | 10.90 | 76.21 | 71.43 | 85.26 | - | 20.11 | - | 2.33 |
| 34 | - | - | 15.00 | - | 59.69 | - | 10.90 | 76.21 | 107.39 | 51.28 | - | 18.14 | - | 1.00 |
| 35 | - | - | 15.00 | - | 59.69 | - | 10.90 | 76.21 | 62.25 | 104.03 | - | 10.51 | - | 3.00 |
| 36 | - | - | 15.00 | - | 59.69 | - | 10.90 | 76.21 | 134.29 | 34.01 | - | 8.50 | - | 0.50 |
| 37 | - | - | 15.00 | - | 59.69 | - | 10.90 | 76.21 | 59.16 | 77.68 | - | 39.97 | - | 3.00 |
| 38 | - | - | 15.00 | - | 59.69 | - | 10.90 | 76.21 | 106.93 | 34.94 | - | 34.93 | - | 0.93 |
| 39 | - | - | - | 11.94 | 61.45 | - | 11.22 | 80.24 | 70.99 | 85.62 | - | 20.19 | - | 2.33 |
| 40 | - | - | - | 11.94 | 61.45 | - | 11.22 | 80.24 | 106.95 | 51.60 | - | 18.25 | - | 1.00 |
| 41 | - | - | - | 11.94 | 61.45 | - | 11.22 | 80.24 | 61.83 | 104.41 | - | 10.55 | - | 3.00 |
| 42 | - | - | - | 11.94 | 61.45 | - | 11.22 | 80.24 | 133.95 | 34.28 | - | 8.57 | - | 0.50 |
| 43 | - | - | - | 11.94 | 61.45 | - | 11.22 | 80.24 | 58.75 | 77.95 | - | 40.11 | - | 3.00 |
| 44 | - | - | - | 11.94 | 61.45 | - | 11.22 | 80.24 | 106.49 | 35.16 | - | 35.15 | - | 0.93 |
| 45 | 69.96 | - | - | - | - | - | 9.60 | 97.24 | 80.74 | 77.73 | - | 18.33 | - | 2.33 |
| 46 | 50.43 | - | - | - | - | 25.68 | 10.38 | 90.31 | 77.32 | 80.49 | - | 18.98 | - | 2.33 |

(continued)

| Example | Amount to be added/g | | | | | | | | | | | | | (Ti + Ta)/Si ratio of the number of atoms |
|---|---|---|---|---|---|---|---|---|---|---|---|---|---|---|
| | Synthesis -1 | | | | | | | | Synthesis -2 | | | | | |
| | Component (A) | | | | Component (B) | | Water | EtOH | Synthesis-1 solution | Ti | | Ta | | |
| | EP-1 | EP-2 | EP-3 | EP-4 | He | Ph | | | | Ti-1 | Ti-2 | Ta-1 | Ta-2 | |
| 47 | 11.56 | - | - | - | 62.08 | - | 11.33 | 91.82 | 45.87 | - | 118.64 | 12.29 | - | 2.33 |
| 48 | 11.56 | - | - | - | 62.08 | - | 11.33 | 91.82 | 70.81 | 80.46 | - | - | 25.53 | 2.33 |

Table 4

| Example | Film thickness (nm) | Evaluation 1 | Evaluation 3 | Evaluation 4 | Evaluation 6 | Evaluation 7 |
|---|---|---|---|---|---|---|
| | | Appearance of solution | Applicability | Coefficient of kinetic friction | After durability test | |
| | | | | | Evaluation of image | Appearance of roller |
| 1 | 80 | A | A | 0.21 | A | A |
| 2 | 80 | A | A | 0.22 | A | A |
| 3 | 80 | A | A | 0.23 | A | A |
| 4 | 70 | A | A | 0.23 | A | B |
| 5 | 80 | A | A | 0.24 | A | B |
| 6 | 80 | A | A | 0.24 | A | B |
| 7 | 70 | A | A | 0.25 | B | B |
| 8 | 60 | A | A | 0.25 | B | C |
| 9 | 70 | A | A | 0.26 | B | B |
| 10 | 70 | A | A | 0.27 | B | C |
| 11 | 80 | A | A | 0.27 | B | B |
| 12 | 80 | A | A | 0.27 | B | B |
| 13 | 70 | A | A | 0.27 | B | C |
| 14 | 70 | A | A | 0.28 | B | B |
| 15 | 80 | A | A | 0.28 | B | B |
| 16 | 60 | A | A | 0.28 | B | C |
| 17 | 60 | A | B | 0.28 | B | B |
| 18 | 60 | A | A | 0.28 | B | C |
| 19 | 60 | A | B | 0.29 | B | B |
| 20 | 70 | A | A | 0.29 | B | C |
| 21 | 80 | A | A | 0.29 | B | B |
| 22 | 80 | A | A | 0.29 | B | C |
| 23 | 80 | A | A | 0.3 | C | C |
| 24 | 60 | A | B | 0.3 | C | C |
| 25 | 80 | A | A | 0.3 | C | C |
| 26 | 60 | A | B | 0.3 | C | C |
| 27 | 80 | A | A | 0.21 | A | A |
| 28 | 80 | A | A | 0.21 | A | A |
| 29 | 80 | A | A | 0.23 | A | A |
| 30 | 80 | A | A | 0.23 | A | B |
| 31 | 80 | A | A | 0.23 | A | B |
| 32 | 80 | A | A | 0.24 | A | B |
| 33 | 80 | A | A | 0.21 | A | A |
| 34 | 80 | A | A | 0.22 | A | A |
| 35 | 80 | A | A | 0.24 | A | A |

(continued)

| Example | Film thickness (nm) | Evaluation 1 | Evaluation 3 | Evaluation 4 | Evaluation 6 | Evaluation 7 |
|---|---|---|---|---|---|---|
| | | | | | After durability test | |
| | | Appearance of solution | Applicability | Coefficient of kinetic friction | Evaluation of image | Appearance of roller |
| 36 | 80 | A | A | 0.23 | A | A |
| 37 | 80 | A | A | 0.24 | A | B |
| 38 | 80 | A | A | 0.24 | A | B |
| 39 | 80 | A | A | 0.22 | A | A |
| 40 | 80 | A | A | 0.22 | A | A |
| 41 | 80 | A | A | 0.22 | A | A |
| 42 | 80 | A | A | 0.23 | A | A |
| 43 | 80 | A | A | 0.24 | A | B |
| 44 | 80 | A | A | 0.23 | A | B |
| 45 | 80 | A | A | 0.23 | A | A |
| 46 | 80 | A | A | 0.23 | A | A |
| 47 | 80 | A | A | 0.21 | A | A |
| 48 | 80 | A | A | 0.21 | A | A |

Table 5

| Expression in Table 3 and Table 6 | Name | Structure | Manufacturer | **MW** | Concentration |
|---|---|---|---|---|---|
| EP-1 | 3-Glycidoxypropyltrimethoxysilane | 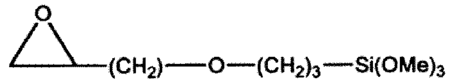 | Shin-Etsu Chemical Co., Ltd. | 236 | 100% |
| EP-2 | 4-(1,2-Epoxybutyl)trimethoxysilane | 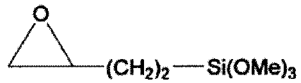 | Carbone Scientific | 192 | 100% |
| EP-3 | 8-Oxirane-2-yloctyltriethoxysilane | 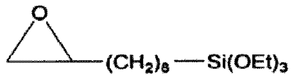 | SiKÉMIA | 319 | 100% |
| EP-4 | 1-(3,4-Epoxycyclohexyl)ethyltrimethoxysilane | 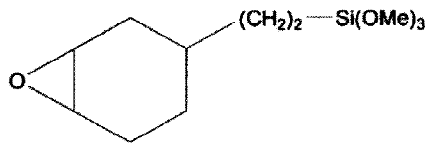 | Shin-Etsu Chemical Co., Ltd. | 246 | 100% |
| He | Hexyltrimethoxysilane | $H_3C—(CH_2)_5—Si(OMe)_3$ | Shin-Etsu Chemical Co., Ltd. | 206 | 100% |
| Ph | Phenyltriethoxysilane | 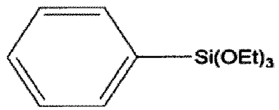 | Shin-Etsu Chemical Co., Ltd. | 240 | 100% |
| Ti-1 | Titanium isopropoxide | $ri\text{-}(O^iPr)_4$ | gelest | 284 | 95% |
| Ti-2 | Titanium n-nonyloxide | $Ti\text{-}(O^nC_9H_{19})_4$ | gelest | 621 | 95% |
| Ta-1 | Tantalum V ethoxide | $Ta\text{-}(OEt)_5$ | gelest | 406 | 100% |
| Ta-2 | Tantalum V n-butoxide | $Ta\text{-}(O^nBu)_5$ | gelest | 547 | 100% |

*Me: methyl group,
Et: ethyl group,
Pr: propyl group, Bu: butyl group

Table 6

| Comparative Example | Synthesis | | | | | Evaluation 1 | Evaluation 3 | Evaluation 4 | Evaluation 6 | Evaluation 7 |
|---|---|---|---|---|---|---|---|---|---|---|
| | Amount to be added (g) | | | | | Appearance of solution | Applicability | Coefficient of kinetic friction | After durability test | |
| | He | Ti-1 | Ta-1 | Water | EtOH | | | | Evaluation of image | Appearance of roller |
| 1 | 74.37 | - | - | 11.68 | 90.75 | B | A | 0.41 | D | C |
| 2 | - | 88.4 | - | 14.14 | 74.26 | C | - | - | - | - |
| 3 | - | - | 91 | 9.68 | 76.12 | C | - | - | - | - |

[Reference Signs List]

101 Substrate
102 Conductive elastic layer
103 Surface layer

## Claims

**1.** A charging member comprising a substrate, an elastic layer and a surface layer, wherein the surface layer comprises a polymer compound having structural units represented by formulas (1), (2) and (3), and having a Si-O-Ti bond, a Ti-O-Ta bond, and a Si-O-Ta bond:

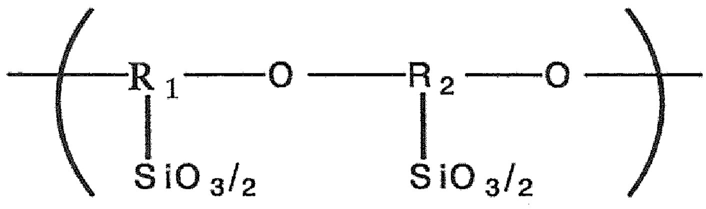

Formula (1)

$TiO_{4/2}$ Formula (2)

$TaO_{5/2}$ Formula (3)

wherein $R_1$ and $R_2$ each independently represent any of formulas (4) to (7):

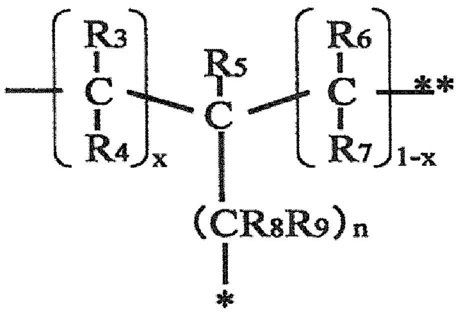

Formula (4)

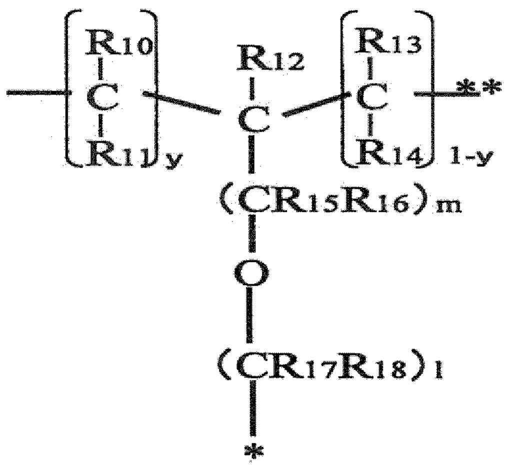

Formula (5)

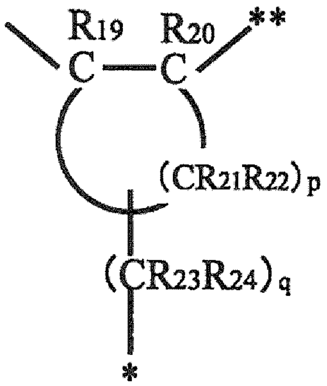

Formula (6)

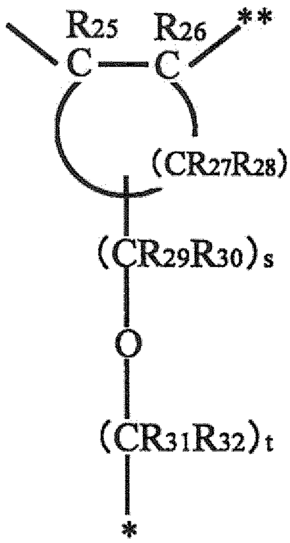

Formula (7)

wherein $R_3$ to $R_7$, $R_{10}$ to $R_{14}$, $R_{19}$, $R_{20}$, $R_{25}$, and $R_{26}$ each independently represent hydrogen, an alkyl group having 1 to 4 carbon atoms, a hydroxyl group, a carboxyl group, or an amino group; $R_8$, $R_9$, $R_{15}$ to $R_{18}$, $R_{23}$, $R_{24}$, and $R_{29}$ to $R_{32}$ each independently represent hydrogen or an alkyl group having 1 to 4 carbon atoms; $R_{21}$, $R_{22}$, $R_{27}$, and $R_{28}$ each independently represent hydrogen, an alkoxyl group having 1 to 4 carbon atoms, or an alkyl group having 1 to 4 carbon atoms; n, m, l, q, s and t each independently represent an integer of not less than 1 and not more than 8, p and r each independently represent an integer of not less than 4 and not more than 12, and x and y each independently represent 0 or 1; and * and ** each represent a position at which a silicon atom and an oxygen atom in the formula (1) are bound.

**2.** The charging member according to claim 1, wherein in the polymer compound, $R_1$ and $R_2$ in the formula (1) each independently represent any selected from structures represented by formulas (8) to (11):

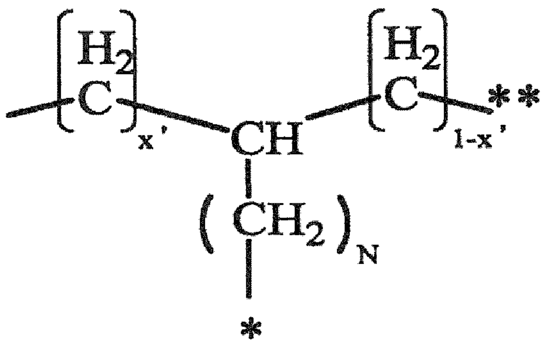

Formula (8)

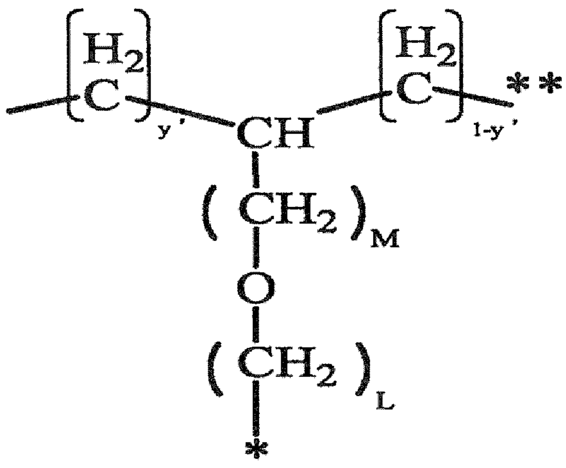

Formula (9)

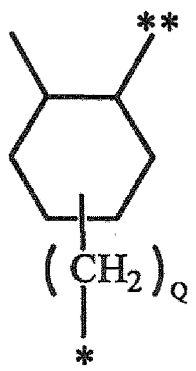

Formula (10)

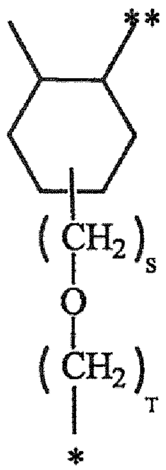

Formula (11)

wherein N, M, L, Q, S and T each independently represent an integer of not less than 1 and not more than 8, and x' and y' each independently represent 0 or 1; and * and ** each represent a position to be bound at in the formula (1).

**3.** The charging member according to claim 1 or 2, wherein in the polymer compound, the ratio of the total number of atoms of titanium and tantalum to the number of atoms of silicon, (Ti + Ta)/Si, is not less than 0.1 and not more than 5.0.

**4.** The charging member according to any one of claims 1 to 3, wherein the polymer compound is a crosslinked product of a condensate of a hydrolyzable compound having a structure represented by a formula (12) and hydrolyzable compounds represented by a formula (13) and a formula (14):

$R_{33}$-Si ($OR_{34}$) ($OR_{35}$) ($OR_{36}$) Formula (12)

Ti ($OR_{37}$) ($OR_{38}$) ($OR_{39}$) ($OR_{40}$) Formula (13)

Ta ($OR_{41}$) ($OR_{42}$) ($OR_{43}$) ($OR_{44}$) ($OR_{45}$) Formula (14)

wherein in the formula (12), $R_{33}$ represents any of formulas (15) to (18), and $R_{34}$ to $R_{36}$ each independently represent an alkyl group having 1 to 4 carbon atoms; in the formulas (13) and (14), $R_{37}$ to $R_{45}$ each independently represent a hydrocarbon group or a hydrocarbon group substituted by at least any one of oxygen and nitrogen; and a hydrocarbon group may be linear, branched, or cyclic, and may have an unsaturated bond:

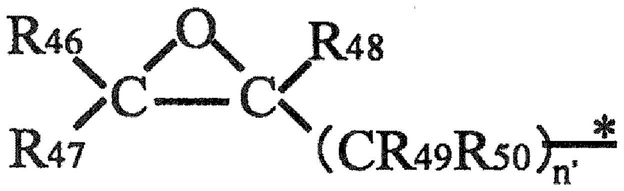

Formula (15)

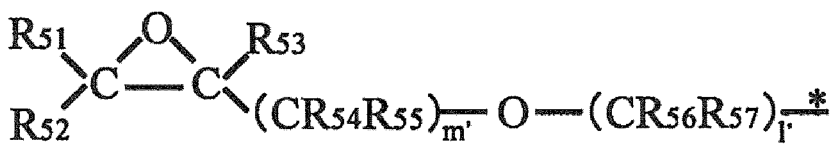

Formula (16)

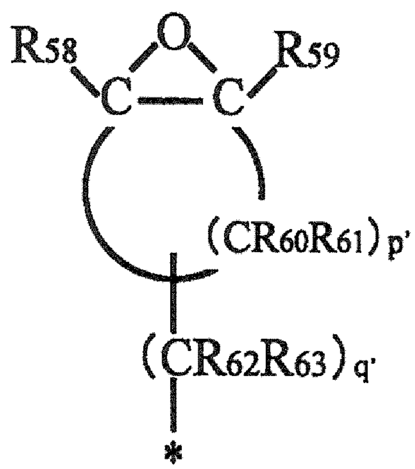

Formula (17)

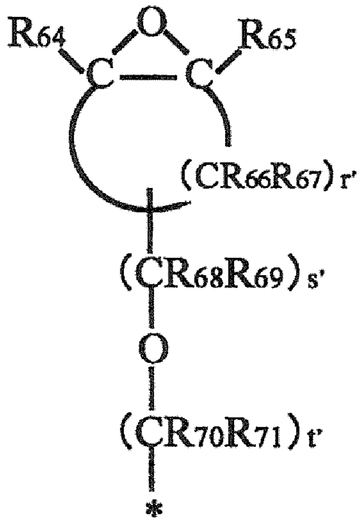

Formula (18)

wherein $R_{46}$ to $R_{48}$, $R_{51}$ to $R_{53}$, $R_{58}$, $R_{59}$, $R_{64}$, and $R_{65}$ each independently represent hydrogen, an alkyl group having 1 to 4 carbon atoms, a hydroxyl group, a carboxyl group, or an amino group; $R_{49}$, $R_{50}$, $R_{54}$ to $R_{57}$, $R_{62}$, $R_{63}$, and $R_{68}$ to $R_{71}$ each independently represent hydrogen, or an alkyl group having 1 to 4 carbon atoms; $R_{60}$, $R_{61}$, $R_{66}$, and $R_{67}$ each independently represent hydrogen, an alkoxyl group having 1 to 4 carbon atoms, or an alkyl group having 1 to 4 carbon atoms; n', m', l', q', s' and t' each independently represent an integer of not less than 1 and not more than 8, and p' and r' each independently represent an integer of not less than 4 and not more than 12; and * represents a position at which a silicon atom in the formula (12) is bound.

**5.** The charging member according to any one of claims 1 to 3, wherein the polymer compound is a crosslinked product of the hydrolyzable compounds represented by the formulas (12), (13) and (14) and a hydrolyzable compound represented by a formula (19):

$$R_{72}\text{-Si}\ (OR_{73})\ (OR_{74})\ (OR_{75}) \qquad \text{Formula (19)}$$

wherein $R_{72}$ represents an alkyl group having 1 to 21 carbon atoms or a phenyl group, and $R_{73}$ to $R_{75}$ each independently represent an alkyl group having 1 to 6 carbon atoms.

**6.** An electrophotographic apparatus comprising an electrophotographic photosensitive member, and the charging member according to any one of claims 1 to 5 disposed in contact with the electrophotographic photosensitive member.

**7.** A process cartridge comprising an electrophotographic photosensitive member, and the charging member according to any one of claims 1 to 5 disposed in contact with the electrophotographic photosensitive member, the process cartridge being detachably attached to a main body of an electrophotographic apparatus.

**Patentansprüche**

**1.** Ladelement, umfassend ein Substrat, eine elastische Schicht und eine Oberflächenschicht, wobei
die Oberflächenschicht eine Polymerverbindung mit Struktureinheiten, die durch die Formeln (1), (2) und (3) dargestellt sind, umfasst,
und mit einer Si-O-Ti-Bindung, einer Ti-O-Ta-Bindung und einer Si-O-Ta-Bindung:

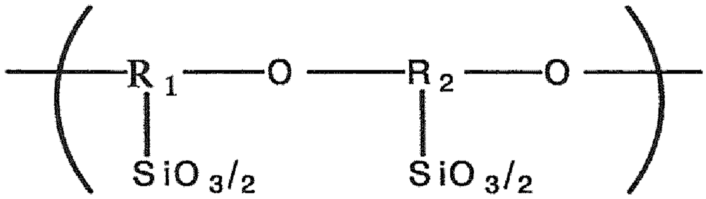

Formel (1)

$TiO_{4/2}$ Formel (2)

$TaO_{5/2}$ Formel (3)

wobei $R_1$ und $R_2$ jeweils unabhängig irgendeine der Formeln (4) bis (7) darstellen:

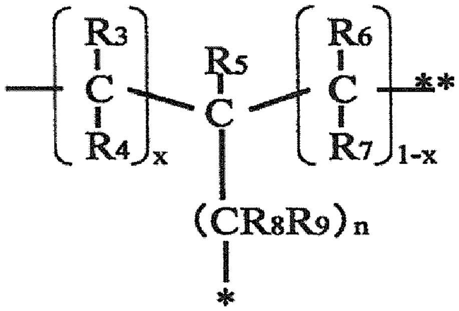

Formel (4)

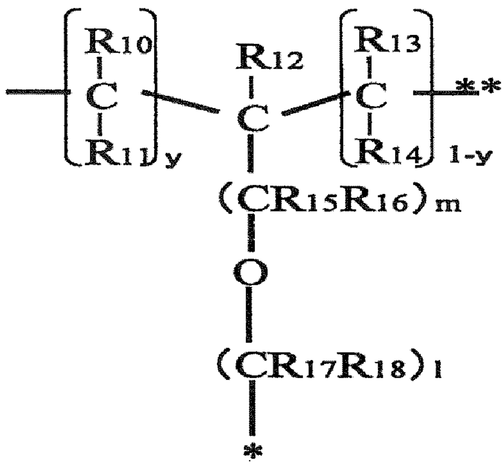

Formel (5)

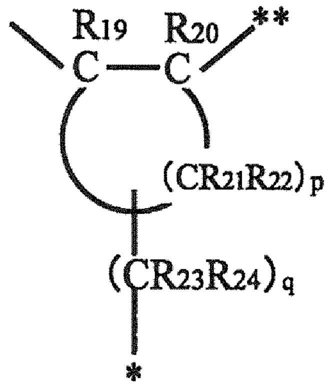

Formel (6)

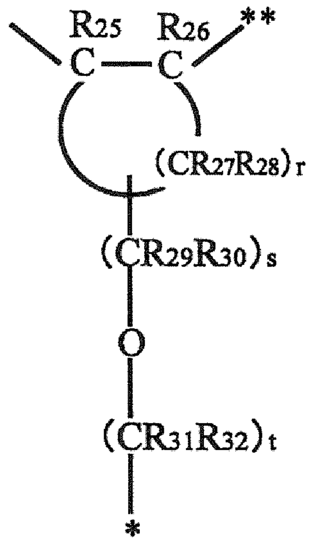

Formel (7)

wobei $R_3$ bis $R_7$, $R_{10}$ bis $R_{14}$, $R_{19}$, $R_{20}$, $R_{25}$ und $R_{26}$ jeweils unabhängig Wasserstoff, eine Alkylgruppe mit 1 bis 4 Kohlenstoffatomen, eine Hydroxylgruppe, eine Carboxylgruppe oder eine Aminogruppe darstellen; $R_8$, $R_9$, $R_{15}$ bis $R_{18}$, $R_{23}$, $R_{24}$ und $R_{29}$ bis $R_{32}$ jeweils unabhängig Wasserstoff oder eine Alkylgruppe mit 1 bis 4 Kohlenstoffatomen darstellen; $R_{21}$, $R_{22}$, $R_{27}$ und $R_{28}$ jeweils unabhängig Wasserstoff, eine Alkoxylgruppe mit 1 bis 4 Kohlenstoffatomen oder eine Alkylgruppe mit 1 bis 4 Kohlenstoffatomen darstellen; n, m, l, q, s und t jeweils unabhängig eine ganze Zahl von nicht weniger als 1 und nicht mehr als 8 darstellen, p und r jeweils unabhängig eine ganze Zahl von nicht weniger als 4 und nicht mehr als 12 darstellen und x und y jeweils unabhängig 0 oder 1 darstellen; und * und ** jeweils eine Position darstellen, an welcher ein Siliciumatom und ein Sauerstoffatom in der Formel (1) gebunden sind.

**2.** Ladeelement nach Anspruch 1, wobei in der Polymerverbindung $R_1$ und $R_2$ in der Formel (1) jeweils unabhängig irgendeine ausgewählt aus durch Formeln (8) bis (11) dargestellten Strukturen darstellen:

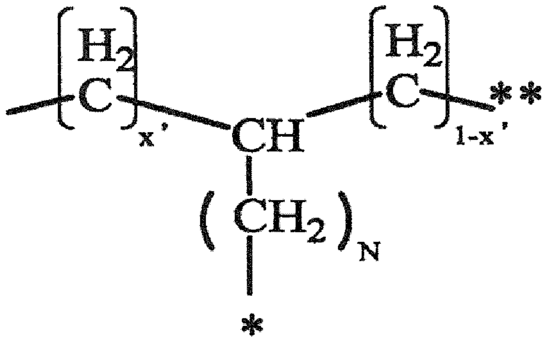

Formel (8)

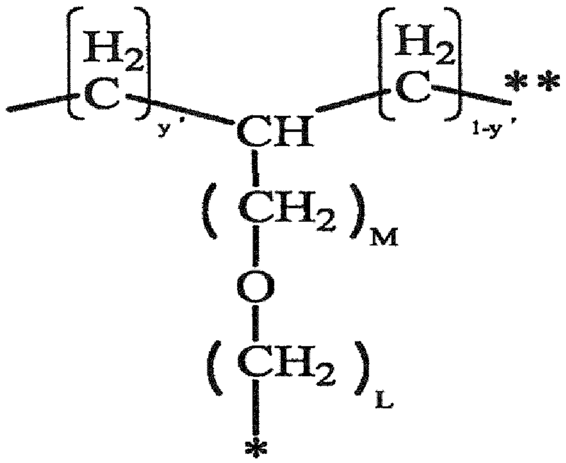

Formel (9)

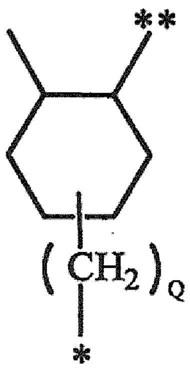

Formel (10)

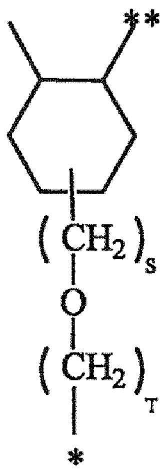

Formel (11)

wobei N, M, L, Q, S und T jeweils unabhängig eine ganze Zahl von nicht weniger als 1 und nicht mehr als 8 darstellen, und x' und y' jeweils unabhängig 0 oder 1 darstellen; und * und ** jeweils eine Position, an die in der Formel (1) zu binden ist.

**3.** Ladeelement nach Anspruch 1 oder 2, wobei in der Polymerverbindung das Verhältnis der Gesamtanzahl an Atomen von Titan und Tantal zu der Anzahl an Atomen von Silicium, (Ti+Ta)/Si, nicht weniger als 0,1 und nicht mehr als 5,0 ist.

**4.** Ladelement nach einem der Ansprüche 1 bis 3, wobei die Polymerverbindung ein vernetztes Produkt eines Kondensats einer hydrolysierbaren Verbindung mit einer durch eine Formel (12) dargestellten Struktur und hydrolysierbaren Verbindungen, die durch eine Formel (13) und eine Formel (14) dargestellt sind, ist:

$R_{33}$-Si ($OR_{34}$) ($OR_{35}$) ($OR_{36}$) Formel (12)

Ti ($OR_{37}$) ($OR_{38}$) ($OR_{39}$) ($OR_{40}$) Formel (13)

Ta ($OR_{41}$) ($OR_{42}$) ($OR_{43}$) ($OR_{44}$) ($OR_{45}$) F ormel (14)

wobei in der Formel (12) $R_{33}$ irgendeine der Formeln (15) bis (18) darstellt und $R_{34}$ bis $R_{36}$ jeweils unabhängig eine Alkylgruppe mit 1 bis 4 Kohlenstoffatomen darstellen; in den Formeln (13) und (14) $R_{37}$ bis $R_{45}$ jeweils unabhängig eine Kohlenwasserstoffgruppe oder eine mit zumindest einem aus Sauerstoff und Stickstoff substituierte Kohlenwasserstoffgruppe darstellen; und eine Kohlenwasserstoffgruppe kann linear, verzweigt oder zyklisch sein und kann eine ungesättigte Bindung aufweisen:

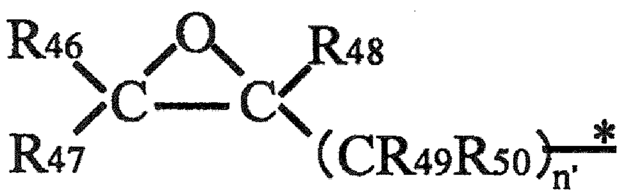

Formel (15)

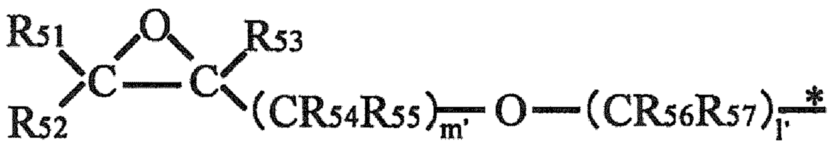

Formel (16)

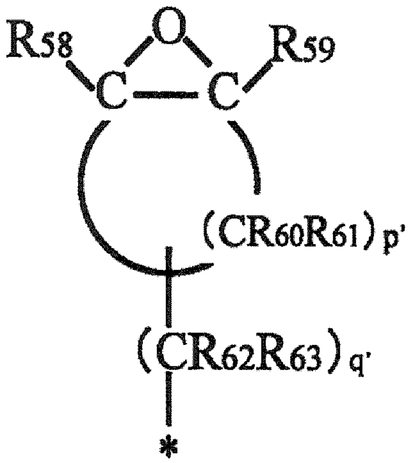

Formel (17)

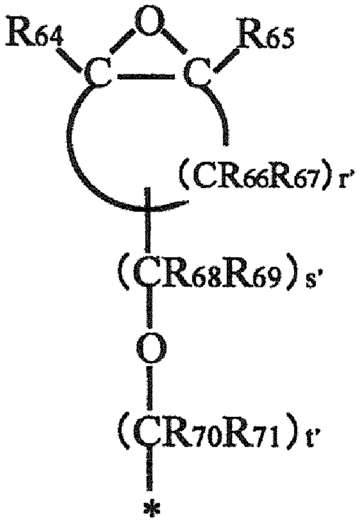

Formel (18)

wobei $R_{46}$ bis $R_{48}$, $R_{51}$ bis $R_{53}$, $R_{58}$, $R_{59}$, $R_{64}$ und $R_{65}$ jeweils unabhängig Wasserstoff, eine Alkylgruppe mit 1 bis 4 Kohlenstoffatomen, eine Hydroxylgruppe, eine Carboxylgruppe oder eine Aminogruppe darstellen; $R_{49}$, $R_{50}$, $R_{54}$ bis $R_{57}$, $R_{62}$, $R_{63}$ und $R_{68}$ bis $R_{71}$ jeweils unabhängig Wasserstoff oder eine Alkylgruppe mit 1 bis 4 Kohlenstoffatomen darstellt; $R_{60}$, $R_{61}$, $R_{66}$ und $R_{67}$ jeweils unabhängig Wasserstoff, eine Alkoxylgruppe mit 1 bis 4 Kohlenstoffatomen oder eine Alkylgruppe mit 1 bis 4 Kohlenstoffatomen darstellen; n', m', l', q', s' und t' jeweils unabhängig eine ganze Zahl von nicht weniger als 1 und nicht mehr als 8 darstellen und p' und r' jeweils unabhängig eine ganze Zahl von nicht weniger als 4 und nicht mehr als 12 darstellen; und * eine Position darstellt, an welche ein Siliciumatom in der Formel (12) gebunden ist.

**5.** Ladeelement nach einem der Ansprüche 1 bis 3, wobei die Polymerverbindung ein vernetztes Produkt der hydrolysierbaren Verbindungen, die durch die Formeln (12), (13) und (14) dargestellt sind, und einer hydrolysierbaren Verbindung, die durch eine Formel (19) dargestellt ist, ist:

$R_{72}$-Si $(OR_{73})$ $(OR_{74})$ $(OR_{75})$ Formel (19)

wobei $R_{72}$ eine Alkylgruppe mit 1 bis 21 Kohlenstoffatomen oder eine Phenylgruppe darstellt, und $R_{73}$ bis $R_{75}$ jeweils unabhängig eine Alkylgruppe mit 1 bis 6 Kohlenstoffatomen darstellen.

**6.** Elektrophotographischer Apparat, umfassend ein elektrophotographisches photosensitives Element und das Ladeelement nach einem der Ansprüche 1 bis 5, das in Kontakt mit dem elektrophotographischen photosensitiven Element angeordnet ist.

7. Prozesskartusche, umfassend ein elektrophotographisches photosensitives Element und das Ladelement nach einem der Ansprüche 1 bis 5, das in Kontakt mit dem elektrophotographischen photosensitiven Element angeordnet ist, wobei die Prozesskartusche abnehmbar an einen Hauptkörper eines elektrophotographischen Apparats angebracht ist.

**Revendications**

1. Elément de charge comprenant un substrat, une couche élastique et une couche de surface, dans lequel :

la couche de surface comprend un composé polymère ayant des motifs structuraux représentés par les formules (1), (2) et (3),
et ayant une liaison Si-O-Ti, une liaison Ti-O-Ta et une liaison Si-O-Ta :

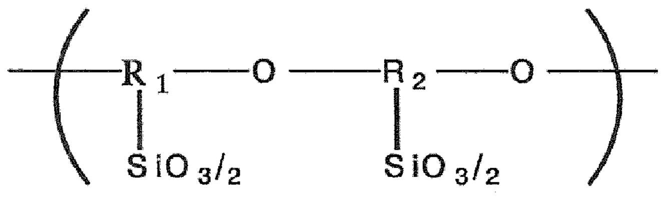

Formule (1)

$TiO_{4/2}$ Formule (2)

$TaO_{5/2}$ Formule (3)

où $R_1$ et $R_2$ représentent chacun indépendamment l'une quelconque des formules (4) à (7) :

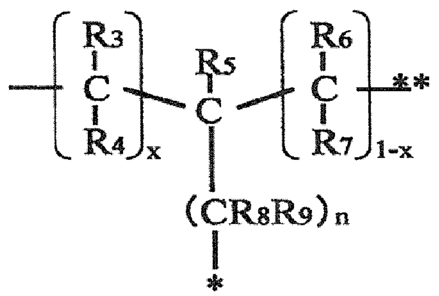

Formule (4)

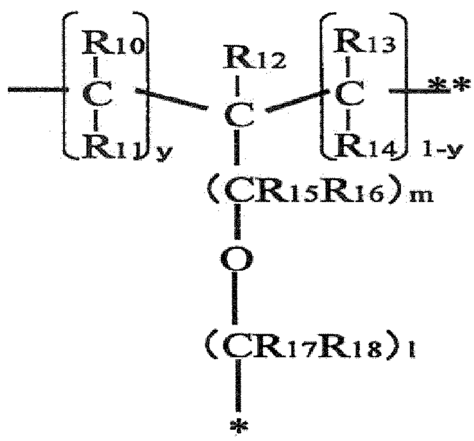

Formule (5)

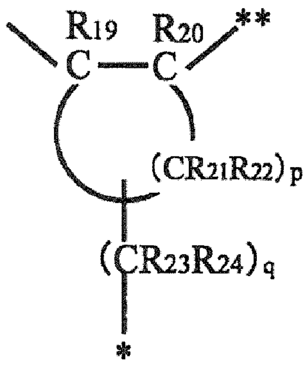

Formule (6)

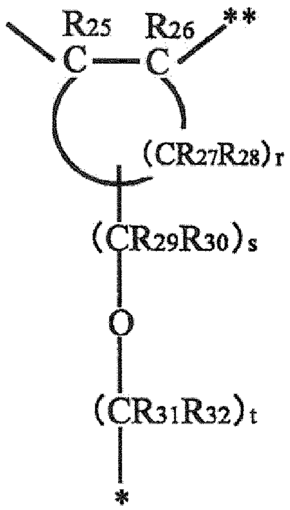

Formule (7)

dans lesquelles $R_3$ à $R_7$, $R_{10}$ à $R_{14}$, $R_{19}$, $R_{20}$, $R_{25}$ et $R_{26}$ représentent chacun indépendamment un atome d'hydrogène, un groupe alkyle ayant 1 à 4 atomes de carbone, un groupe hydroxyle, un groupe carboxyle ou un groupe amino ; $R_8$, $R_9$, $R_{15}$ à $R_{18}$, $R_{23}$, $R_{24}$ et $R_{29}$ à $R_{32}$ représentent chacun indépendamment un atome d'hydrogène ou un groupe alkyle ayant 1 à 4 atomes de carbone ; $R_{21}$, $R_{22}$, $R_{27}$ et $R_{28}$ représentent chacun indépendamment un atome d'hydrogène, un groupe alkoxyle ayant 1 à 4 atomes de carbone ou un groupe alkyle ayant 1 à 4 atomes de carbone ; n, m, l, q, s et t représentent chacun indépendamment un nombre entier non inférieur à 1 et non supérieur à 8, p et r représentent chacun indépendamment un nombre entier non inférieur à 4 et non supérieur à 12, et x et y sont chacun égaux indépendamment à 0 ou 1 ; et * et ** représentent chacun une position à laquelle un atome de silicium et un atome d'oxygène dans la formule (1) sont liés.

**2.** Elément de charge suivant la revendication 1, dans lequel, dans le composé polymère, $R_1$ et $R_2$ dans la formule (1) représentent chacun indépendamment n'importe quelle structure choisie parmi les structures représentées par les formules (8) à (11) :

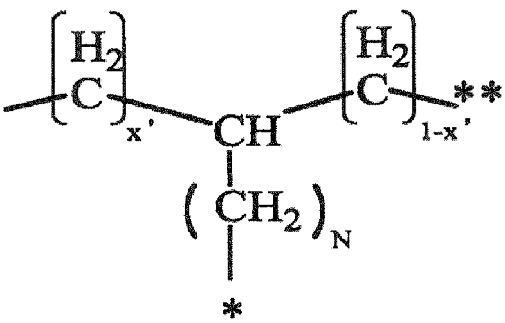

Formule (8)

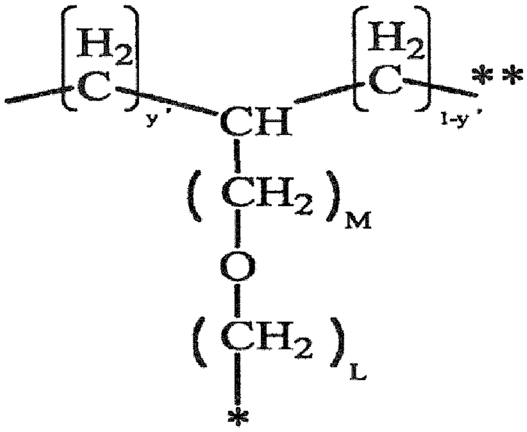

Formule (9)

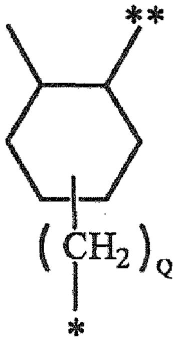

Formule (10)

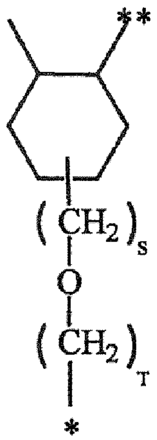

Formule (11)

dans lesquelles N, M, L, Q, S et T représentent chacun indépendamment un nombre entier non inférieur à 1 et non supérieur à 8, et x' et y' sont chacun égaux indépendamment à 0 ou 1 ; et * et ** représentent chacun une position de liaison dans la formule (1).

3. Elément de charge suivant la revendication 1 ou 2, dans lequel, dans le composé polymère, le rapport du nombre total d'atomes de titane et de tantale au nombre d'atomes de silicium, (Ti + Ta)/Si, est non inférieur à 0,1 et non supérieur à 5,0.

4. Elément de charge suivant l'une quelconque des revendications 1 à 3, dans lequel le composé polymère est un produit réticulé d'un condensat d'un composé hydrolysable ayant une structure représentée par une formule (12) et de composés hydrolysables représentés par une formule (13) et une formule (14) :

$R_{33}$-Si ($OR_{34}$) ($OR_{35}$) ($OR_{36}$) Formule (12)

Ti ($OR_{37}$) ($OR_{38}$) ($OR_{39}$) ($OR_{40}$) Formule (13)

Ta ($OR_{41}$) ($OR_{42}$) ($OR_{43}$) ($OR_{44}$) ($OR_{45}$) Formule (14)

où, dans la formule (12), $R_{33}$ représente l'une quelconque des formulas (15) à (18), et $R_{34}$ à $R_{36}$ représentent chacun indépendamment un groupe alkyle ayant 1 à 4 atomes de carbone ; dans les formules (13) et (14), $R_{37}$ à $R_{45}$ représentent chacun indépendamment un groupe hydrocarboné ou un groupe hydrocarboné substitué par au moins l'un quelconque de l'oxygène et de l'azote ; et un groupe hydrocarboné peut être linéaire, ramifié ou cyclique et peut comporter une liaison insaturée :

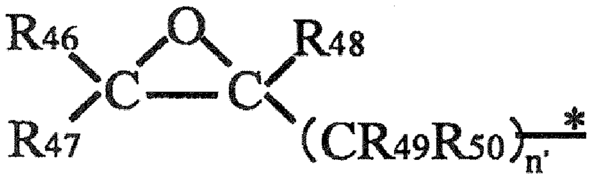

Formule (15)

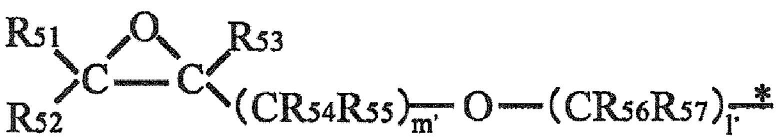

Formule (16)

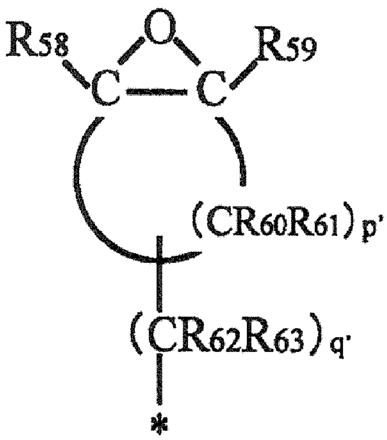

Formule (17)

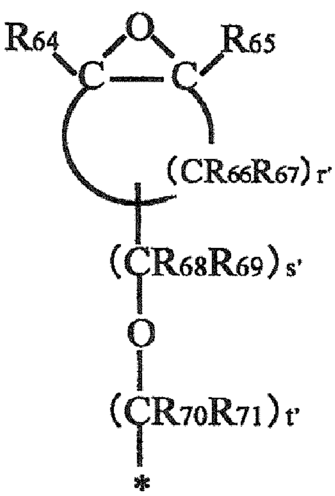

Formule (18)

où $R_{46}$ à $R_{48}$, $R_{51}$ à $R_{53}$, $R_{58}$, $R_{59}$, $R_{64}$ et $R_{65}$ représentent chacun indépendamment un atome d'hydrogène, un groupe alkyle ayant 1 à 4 atomes de carbone, un groupe hydroxyle, un groupe carboxyle ou un groupe amino ; $R_{49}$, $R_{50}$, $R_{54}$ à $R_{57}$, $R_{62}$, $R_{63}$ et $R_{68}$ à $R_{71}$ représentent chacun indépendamment un atome d'hydrogène ou un groupe alkyle ayant 1 à 4 atomes de carbone ; $R_{60}$, $R_{61}$, $R_{66}$ et $R_{67}$ représentent chacun indépendamment un atome d'hydrogène, un groupe alkoxyle ayant 1 à 4 atomes de carbone, ou un groupe alkyle ayant 1 à 4 atomes de carbone ; n', m', l', q', s' et t' représentent chacun indépendamment un nombre entier non inférieur à 1 et non supérieur à 8, et p' et r' représentent chacun indépendamment un nombre entier non inférieur à 4 et non supérieur à 12 ; et * représente une position à laquelle un atome de silicium dans la formule (12) est lié.

**5.** Elément de charge suivant l'une quelconque des revendications 1 à 3, dans lequel le composé polymère est un produit réticulé d'un condensat des composés hydrolysables représentés par les formules (12), (13) et (14) et d'un composé hydrolysable représenté par une formule (19) :

$$R_{72}\text{-Si}\ (OR_{73})\ (OR_{74})\ (OR_{75}) \qquad \text{Formule (19)}$$

où $R_{72}$ représente un groupe alkyle ayant 1 à 21 atomes de carbone ou un groupe phényle, et $R_{73}$ à $R_{75}$ représentent chacun indépendamment un groupe alkyle ayant 1 à 6 atomes de carbone.

**6.** Appareil électrophotographique comprenant un élément photosensible électrophotographique, et l'élément de charge suivant l'une quelconque des revendications 1 à 5 disposé en contact avec l'élément photosensible électrophotographique.

**7.** Cartouche de traitement comprenant un élément photosensible électrophotographique, et l'élément de charge suivant l'une quelconque des revendications 1 à 5 disposé en contact avec l'élément photosensible électrophotographique, la cartouche de traitement étant fixée de manière amovible au corps principal d'un appareil électrophotographique.

FIG. 1

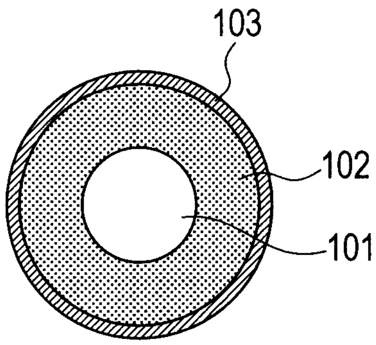


FIG. 2

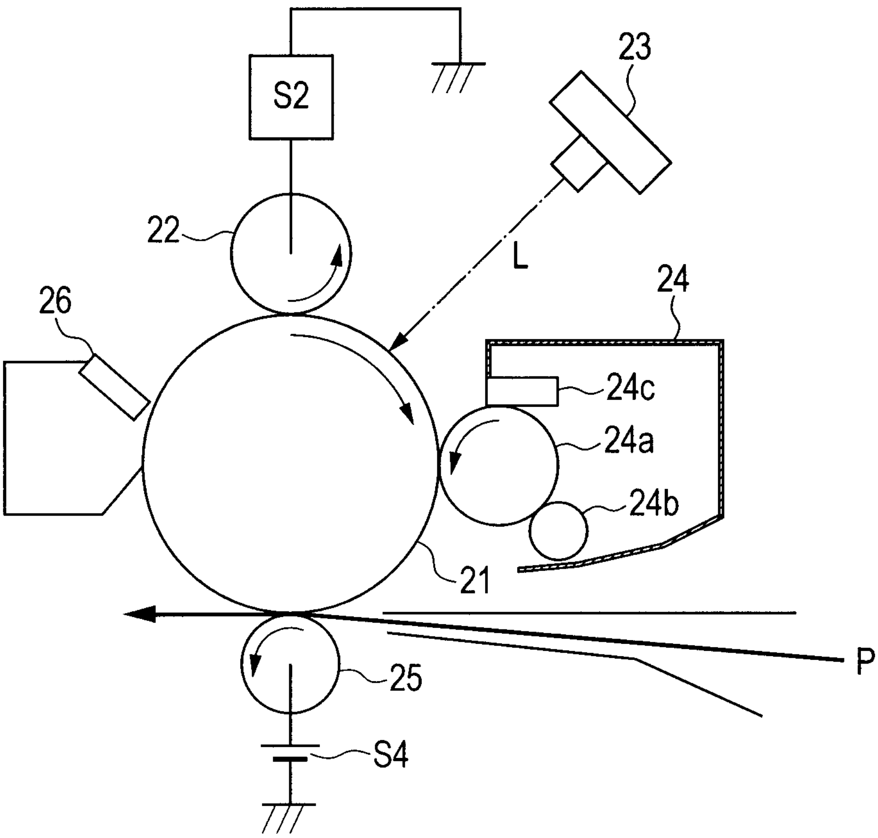

*FIG. 3*

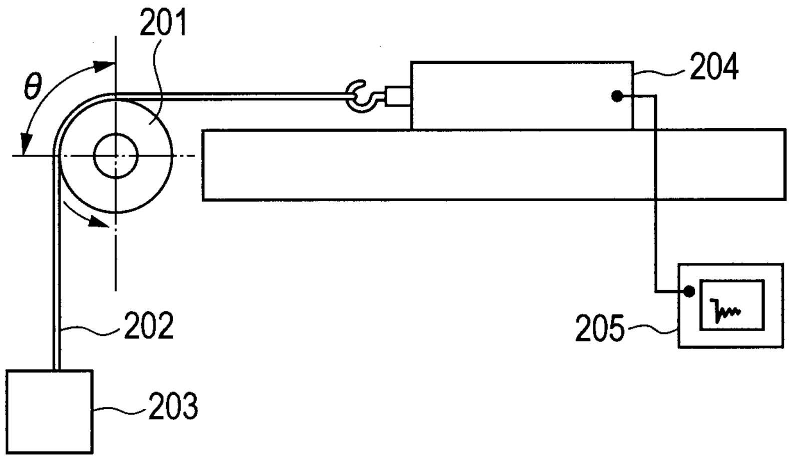


*FIG. 4*

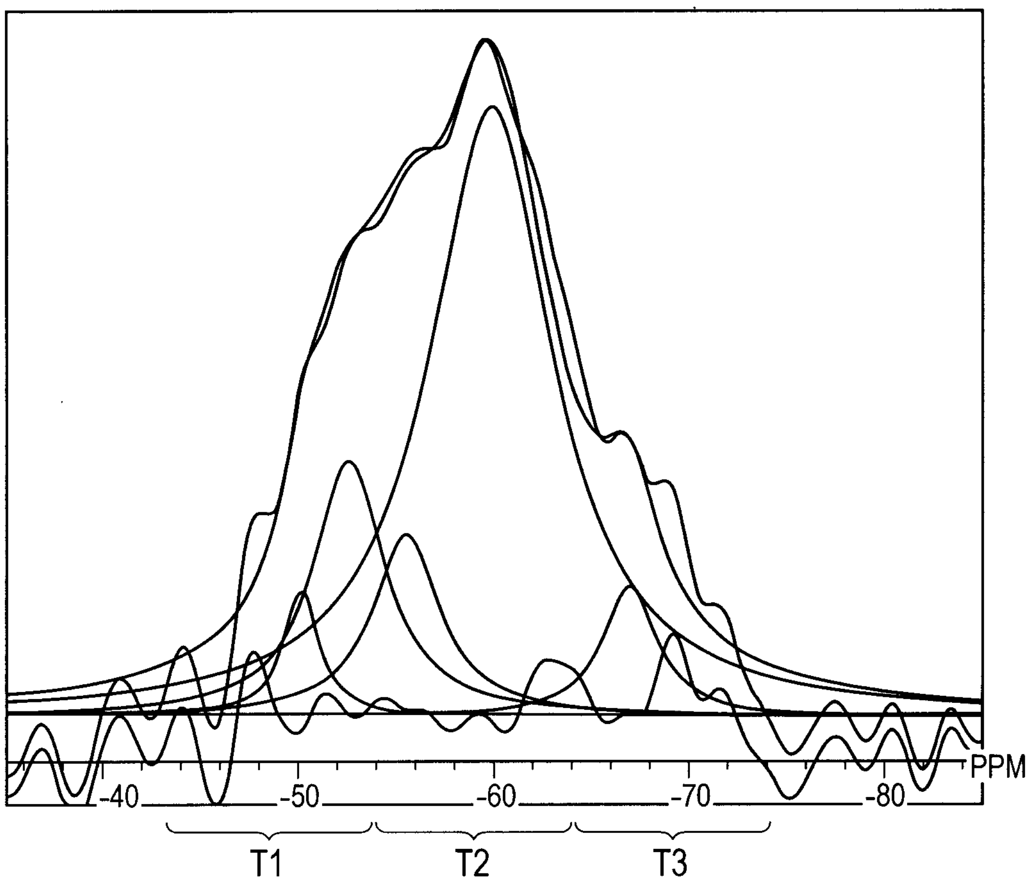

FIG. 5

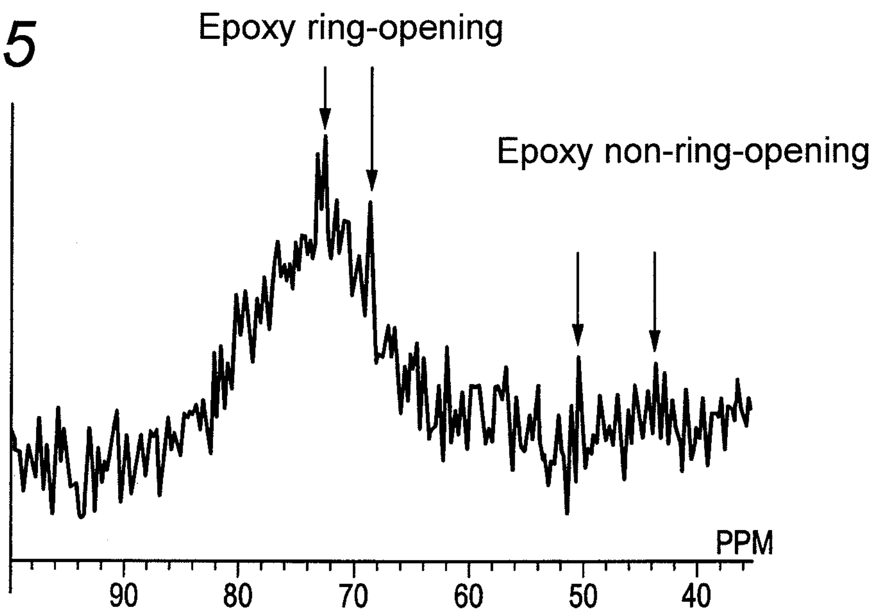
Epoxy ring-opening
Epoxy non-ring-opening
PPM
90
80
70
60
50
40

FIG. 6

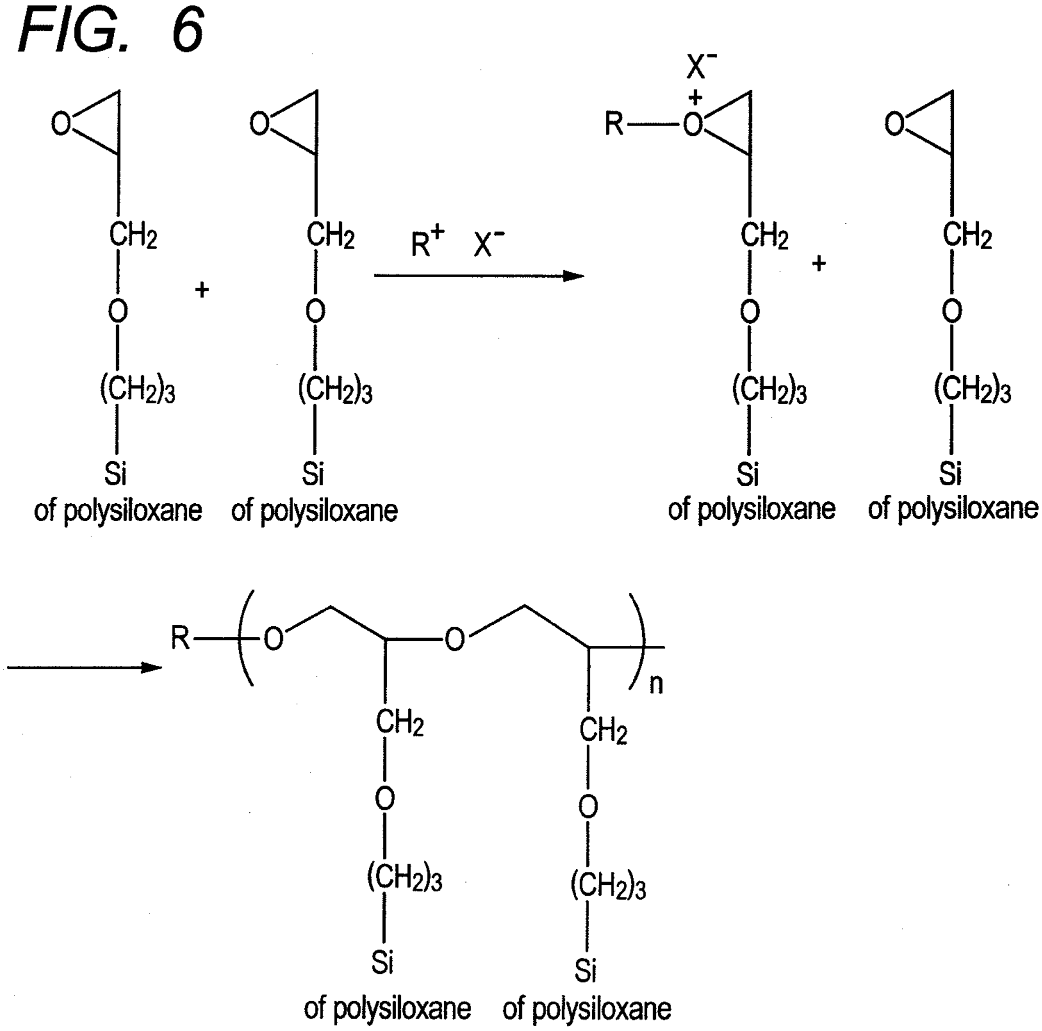
R+ X-

FIG. 7A

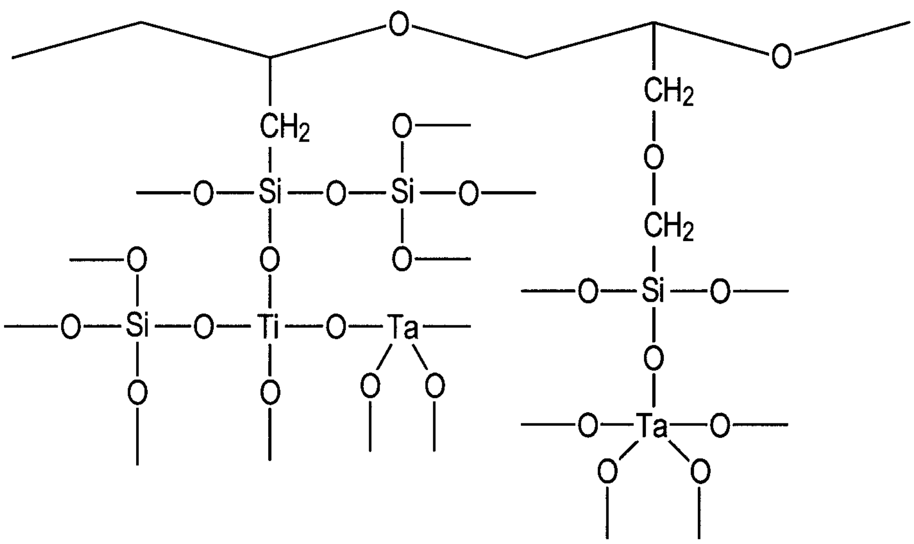

FIG. 7B

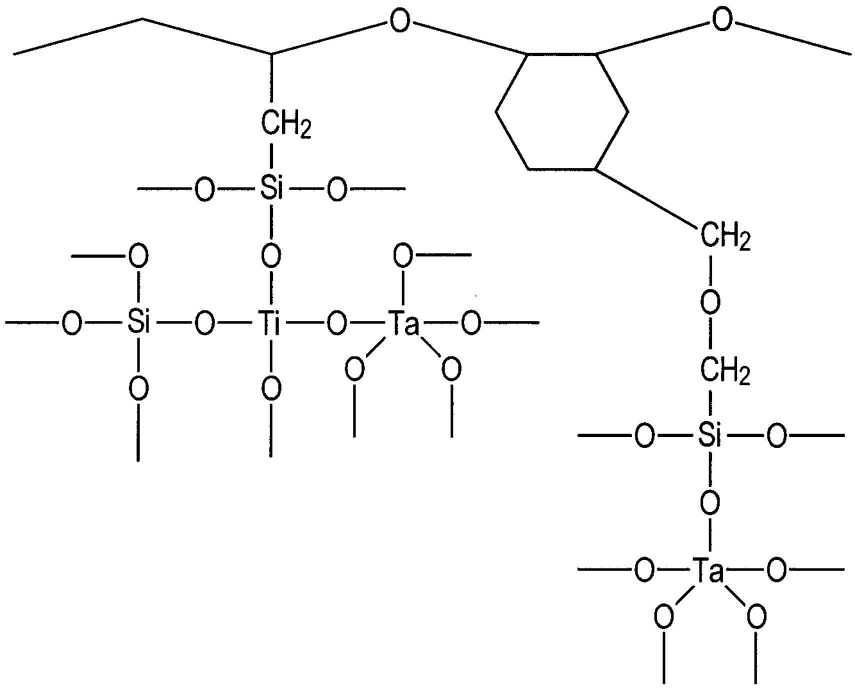

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001173641 A
- JP 2000337355 A